# EUROPÄISCHE PATENTSCHRIFT

(11) **EP 2 907 558 B1**
(45) Veröffentlichungstag und Bekanntmachung des Hinweises auf die Patenterteilung: **16.08.2017**
(21) Anmeldenummer: 14002953.9
(22) Anmeldetag: 26.08.2014
(51) Int. Cl.: A63H 18/14

(54) **FAHRBAHNSYSTEME FÜR MODELLFAHRZEUGE OHNE AUTARKEN ANTRIEB, INSBESONDERE FÜR MODELLFAHRZEUGE MIT MAGNETVORTRIEB IN DER FAHRBAHN**
TRACKWAY FOR TOY VEHICLES WITHOUT STANDALONE DRIVE, ESPECIALLY FOR TOY VEHICLES WITH MAGNETIC PROPULSION IN THE TRACKWAY
SYSTÈMES DE VOIES DE ROULEMENT POUR VEHICULES-JOUETS SANS FORCE MOTRICE AUTONOME, EN PARTICULIER POUR VEHICULES-JOUETS A PROPULSION MAGNETIQUE DANS LA VOIE DE ROULEMENT

(30) Priorität: 12.02.2014 DE 202014001344 U
(43) Veröffentlichungstag der Anmeldung: 19.08.2015
(73) Patentinhaber: Freyer, Wolfgang, 33334 Gütersloh (DE)
(72) Erfinder: Freyer, Wolfgang, 33334 Gütersloh (DE)

(56) Entgegenhaltungen:
- EP-A1- 2 213 348
- DE-A1- 1 603 507
- DE-A1- 3 147 315
- KR-A- 20100 121 930
- US-A- 2 794 929
- US-A- 5 865 661
- US-A1- 2011 294 391

## Beschreibung

Die Erfindung betrifft ein System von Modell- und/oder Spielzeugfahrzeugen, die auf einer Fahrbahn ohne Eigenantrieb bewegbar sind.

Im Stand der Technik offenbart die DE 20 2010 001 571 U ein System, welches eine Fahrbahn und Spielzeug- oder Modellfahrzeuge umfasst, wobei die Spielzeug- oder Modellfahrzeuge eine Lenkung aufweisen, die über eine Magnetsteuerung einem, in der Fahrbahn verlegten Draht folgen, während die Modellfahrzeuge energieautark mit Hilfe eines E-Motors und Akkumulators angetrieben werden. Darüber hinaus offenbart die DE 20 2010 001 571 U in der Fahrbahn einzelne Spulen, mit denen an bestimmten Stellen Befehle oder Informationen an das Modellfahrzeug übertragen werden können. Dieses System ist nur für Modell- u. Spielfahrzeuge mit Baugrößen bis 1:87 geeignet. Sind die Baugrößen der Modell- u. Spielfahrzeuge kleiner als der Maßstab 1:87, können diese Fahrzeuge, aufgrund des Platzbedarfes eines E-Motors und eines Akkumulators, keinen eigenen aktiven Antrieb mehr aufnehmen und sind somit technisch nicht mehr mit einem internem Antrieb realisierbar. Schließlich offenbart die DE 20 2007 0034 722 einen Linearantrieb für auf einer Fahrbahn geführte Spielzeug- oder Modellfahrzeuge ohne eigene Antriebe, bei dem sich als festes Antriebsteil ein magnetisches Wanderfeld erzeugender Langsstator mit Elektromagneten, die mittels Drehstrom mit von einer elektronischen Steuerung anpassbarer Frequenz erregbar sind, in oder an der Fahrbahn befindet. Das Modellfahrzeug hingegen ist mit einem Permanent- oder Elektromagneten versehen, der mit dem vom Langsstator erzeugten magnetischen Wanderfeld erfasst und mitgenommen wird. Ein großes Problem bei einem solchen Linearantrieb ist die Entwicklung enormer Hitze, die bei der Erzeugung magnetischer Wanderfelder entsteht. Diese Hitzeentwicklung ist, für die Verwendung von Modellfahrzeugen im Modellbau äußerst gefährlich. Ein weiterer Nachteil besteht darin, dass sich ein solches System nicht auf extrem verkleinerte Fahrzeugmodelle, kleiner 1:87, anwenden lässt. Alle bisher bekannten, eingesetzten und erhältlichen Systeme haben den Nachteil, dass sie für Modellfahrzeuge kleiner 1:87 nicht geeignet sind. Nicht schienengebundene Modellfahrzeuge werden durch mitgeführte Akkumulatoren mit dem für den Fahrbetrieb notwendigen Strom versorgt, wobei die Motor-und Getriebeeinheit sehr viel Platz in Anspruch nehmen. Einer Verkleinerung der baulichen Größe eines Modellfahrzeuges sind daher Grenzen gesetzt.

Somit stellt sich die Aufgabe, auch für extrem verkleinerte Modell- oder Spielzeugfahrzeuge ein System zu entwickeln, bei dem die Fahrzeuge auch in starker Verkleinerung der Baugröße ohne menschliche Unterstützung, sondern nur mit Hilfe technischer Mittel fahrbar sind. Die Verkleinerung der Baugröße lässt sich nur erreichen, wenn die Modellfahrzeuge keinen eigenen, energieautarken Antrieb aufweisen und ohne eigenes Lenkvermögen auf beliebigen Fahrbahnen bewegbar, wirtschaftlich herstellbar und einfach anwendbar sind. Aus der DE 20 2007 004 722 ist zwar ein Modellfahrzeug bekannt, welches über keinen eigenen Antrieb verfügt und dessen Antrieb in der Fahrbahn vorgesehen ist. Aber das Modellfahrzeug benötigt einen länglichen Permanentmagneten, welcher als Linearantrieb eine bestimmte Größe gegenüber dem Langstator in der Fahrbahn aufweisen muss. Die Länge eines solchen Permanentmagneten lässt Baugrößen bei Modellfahrzeugen kleiner 1:87 ebenfalls nicht zu, wobei der Maßstab 1:87 der bekannten Modellbaugröße "H0" entspricht. Dieser externe Linearantrieb lässt sich für Modellfahrzeuge in der Baugröße kleiner 1:87, beispielsweise in den Modellbaugrößen TT = 120, N = 160 und Z = 220, nicht verwenden. Aus der DE-A-3 147 315 ist ein System von Modell- oder Spielzeugfahrzeugen, die auf einer Fahrbahn ohne Eigenantrieb bewegbar sind, bekannt. Für eine Lösung dieser Aufgabenstellung wird ein System für Modellfahrzeuge vorgeschlagen, bei dem die Modellfahrzeuge keinen eigenen energieautarken Antrieb, z.B. durch E-Motor und Akkumulator, aufweisen, sondern der Antrieb für ein Modellfahrzeug ist ebenfalls in die Fahrbahn integriert. Bei dieser Lösung ist an der Modellfahrzeug-Unterseite ebenfalls ein ferromagnetischer Materialstreifen angeordnet. Der Unterschied zur ersten Lösung besteht darin, dass jetzt nicht zwei an der Modellfahrzeug-Unterseite im Abstand voneinander angeordnete ferromagnetische Materialstreifen vorgesehen sind, sondern nur noch einer, der ungefähr mittig und unterhalb des Modellfahrzeuges angeordnet ist und als passives Element eingesetzt wird.

Anstelle der in die Fahrbahn eingelassenen Fahrbahnsegmente mit integrierten elektromagnetischen Spulen, ist jetzt ein geschlossenes hydraulisches Kanalsystem vorgesehen. Die Kanäle können vorteilhafterweise aus quadratischen Kunststoffröhren gebildet sein, aber auch andere Formen von Kanälen und Materialien sind denkbar. Die Kanäle bestehen aus einzelnen Kanalsegmenten, die zu einem Kanalsystem zusammensteckbar sind. Die Kanäle werden als Strömungskanäle für Hydraulikflüssigkeiten verwendet. Als Hydraulikflüssigkeiten stehen viele, aus dem Stand der Technik bekannte Flüssigkeiten, zur Verfügung. Wegen der konstanten Viskosität bei unterschiedlichen Temperaturen, wird als Hydraulikflüssigkeit vorteilhafterweise Wasser mit Anteilen von Frostschutzmittel verwendet.

Eine Wandung der Strömungskanäle bildet dabei die Fahrbahnoberseite, die wiederum mit einem Fahrbahnfolienstreifen oder ähnlichem, zur Verringerung der Reibung zwischen dem Modellfahrzeug und der Fahrbahn, versehen sein kann. Der Folienstreifen wird aus diesem Grunde nachstehend als Fahrbahn bezeichnet. Ein Permanentmagnet ist in einem unter der Fahrbahn vorgesehenen Strömungskanal von einer darin strömenden Hydraulikflüssigkeit mitnehmbar. Das Magnetfeld des Permanentmagneten wirkt mit dem ferromagnetischen Materialstreifen zusammen. Aufgrund der festgelegten und somit vorgegebenen Strömungsrichtung der Hydraulikflüssigkeit wird eine Vorwärtsbewegung eines Modellfahrzeugs bewirkt. Dabei ist es vorteilhaft, wenn in dem Strömungskanal unter der Fahrbahn ein, mit der Hydraulikflüssigkeit zusammenwirkender Schwimmkörper, vorgesehen ist, der einen Permanentmagneten trägt. Zur Verbesserung der Führung des Schwimmkörpers im Strömungskanal ist dieser mit mindestens einem Abstandshalter, vorzugsweise mit zwei Abstandshaltern, versehen. Vor allem im Bereich von Fahrbahnkurven und Kreisverkehren, sowie zum Abstandhalten von in einer Fahrspur hintereinander fahrenden Modellfahrzeugen, sind diese Abstandshalter notwendig. Ein Abstandshalter ist vor dem Schwimmkörper vorwärts gerichtet angeordnet, und ein anderer ist hinter dem Schwimmkörper und somit rückwärts gerichtet, angeordnet. An dem jeweils freien Ende eines Abstandshalters ist ein Abstandshaltekopf angeordnet.

Zur Bewegung der Hydraulikflüssigkeit wird vorteilhaft eine Saugpumpe eingesetzt. Diese Saugpumpe ist dabei vorteilhaft in einem Bypass zum Kanalsystem eingesetzt. Der Bypass besteht aus einer Zu- und Rückströmleitung, so dass die Ausströmung der Hydraulikflüssigkeit aus dem Strömungskanal durch Ansaugen in Bewegung gesetzt wird. Als Saugpumpe kommen beispielsweise Zahnradpumpen in Frage. Diese Zahnradpumpen können selbst mit einem Bypass ausgebildet sein. Dabei wird über Rückströmöffnungen Hydraulikflüssigkeit aus dem Kanalsystem abgesaugt und über Zuströmöffnungen wieder den Strömungskanälen zugeführt. Die Bewegung eines Modellfahrzeuges soll durch Ansaugen erzeugt werden, wodurch bei eventuellen Störungen außerhalb und/oder innerhalb eines Strömungskanales kein Überdruck entstehen und somit keine Flüssigkeit austreten kann. Die Modellfahrzeuge werden also durch die in der Strömungsflüssigkeit auf Schwimmkörpern angeordneten Permanentmagneten gezogen. Die Grundgeschwindigkeit eines Modellfahrzeuges wird durch verschiedene Parameter bestimmt, wie durch den Querschnitt eines Strömungskanales und/oder die Leistung der Hydraulikpumpe, nur um einige zu nennen, während die Regulierung der Geschwindigkeit eines Modellfahrzeuges auf unterschiedliche Art und Weise erfolgen kann. Eine Veränderung der Geschwindigkeit eines Modellfahrzeuges kann durch die Veränderung des Querschnittes eines Strömungskanales, gemäß dem Venturi-Effekt, erfolgen. Eine andere Art der Geschwindigkeitsänderung eines Modellfahrzeuges kann durch Zu- und Abschalten von Bypässen oder durch deren Regulierung erfolgen. Bei einer Grundgeschwindigkeit des Modellfahrzeuges von z.B. ca. v= 50 km/h, was einer Modell-Fahrzeit von 11,5 sek. pro Meter entspricht, müsste der Querschnitt eines Strömungskanales in etwa 100 mm² und die Leistung der Pumpe 10 cm³/sek. betragen. Bei einer angenommenen Geschwindigkeit des Modellfahrzeuges von ca. v= 30 km/h, was eine Modell-Fahrzeit von 19,1 sek. pro Meter bedeuten würde, wäre der Querschnitt des Strömungskanales in etwa 180 mm² bei gleicher Leistung der Hydraulikpumpe. D.h., über den Querschnitt eines Strömungskanales ließe sich eine bestimmte Grundgeschwindigkeit eines Modellfahrzeuges festlegen. Eine Geschwindigkeitsregulierung dieser Grundgeschwindigkeit, könnte dann mit den zuvor beschriebenen Maßnahmen variiert werden. Ein Betrieb mit mehreren Modellfahrzeugen in diesem hydraulischen Kanalsystem in Vorwärtsfahrt ist vorgesehen, wobei ein Gegenverkehr auf gleicher Fahrbahn nicht möglich ist. Diese Modellfahrzeuge erfüllen alle die Voraussetzung, dass die Baugröße im Maßstab kleiner 1:87, vorzugsweise im Maßstab 1:120, 1:160 bis 1:220 oder ähnlich, ist.

Zur Verringerung der Reibung zwischen einem Modellfahrzeug und einer Fahrbahn sowie zur Verringerung von Unebenheiten bei den Anschlüssen der Kanalsegmente und ähnlichem, wird die Fahrbahn-Oberseite der Strömungskanäle mit einer glatten Folie in Form eines Folienstreifens versehen. Dazu wird vorteilhaft ein Klebestreifen in Art eines TESA^{®}-Films auf die Oberseite des die Fahrbahn bildenden Kanals aufgeklebt.

Bei einem Betrieb mit mehreren Modellfahrzeugen in einer Fahrbahnspur in gleicher Richtung ist es notwendig, den Abstand zwischen den Modellfahrzeugen vorzugeben und/oder zu kontrollieren. Die Kontrolle der örtlichen Position eines Modellfahrzeuges erfolgt einerseits durch REED-Schalter, die durch die Magneten im Strömungskanal aktiviert werden können. Andererseits durch den Stopp und Start an Lichtsignalanlagen, wie Ampelanlagen, Fußgängerampeln, Schranken usw., die an der Fahrstrecke angeordnet sind, wobei die Unterbrechung der Bewegungsabfolge, z.B. mit einer Ampelschaltung gekoppelt sein kann und den Vortrieb eines Modellfahrzeuges stoppt und wieder frei gibt. Der Start von Modellfahrzeugen an Lichtsignalanlagen kann zeitverzögert erfolgen. Z.B. ergibt eine Zeitverzögerung beim Start mehrerer Modellfahrzeuge von jeweils 0,5 sek. einen Abstand von bis zu ca. 90 mm zwischen den Modellfahrzeugen. Der Abstand von, in einer Fahrspur hintereinander fahrenden Modellfahrzeugen kann aber auch über, an den Schwimmkörpern angeordneten Abstandshaltern, erfolgen. Die Abstandshalter sind aus biegsamen Kunststoffstreifen mit jeweils einem am freien Ende angeordneten Abschlussprofil, welches als Anschlagpuffer, nachstehend als Abstandshaltekopf bezeichnet, wirkt.

Als nächstes soll eine aus Strömungskanälen bestehende Kreuzung näher betrachtet werden. Diese erfinderische Kreuzung besteht aus acht Strömungskanälen, wobei jeweils zwei Strömungskanäle unmittelbar nebeneinander angeordnet sind und ein Paar bilden. Diese acht Strömungskanäle bilden wiederum die acht Fahrbahnen einer Kreuzung, wobei die Fahrbahnen paarweise auf den Kreuzungsbereich zulaufen. Eine Fahrbahn der paarweisen Anordnung betrifft die Fahrbahn der Zufahrt zum Kreuzungsbereich und die andere, parallel dazu ausgerichtete Fahrbahn die Ausfahrt aus dem Kreuzungsbereich. Jede Fahrbahn, welche die Zufahrt zur Kreuzung bildet, enthält eine Zuströmstelle und weist vor dem Kreuzungsbereich für die Modellfahrzeuge eine Haltelinie und eine Lichtsignalanlage auf, während in etwa an der gleichen Stelle sich im darunterliegenden Strömungskanal ein Bypass zum Strömungskanal befindet. Nach dem Kreuzungsbereich ist jede Ausfahrt einer Fahrbahn, die für die gerade Ausfahrt und die für die Links- und Rechtsabbieger, mit einer Rückströmstelle versehen. Aus diesen Rückströmstellen kann Hydraulikflüssigkeit abgesaugt werden, je nachdem welche Rückströmstelle geöffnet ist. Die vier Fahrbahnen, welche die Ausfahrten aus dem Kreuzungsbereich bilden, weisen im Strömungskanal keine Hindernisse auf, welche die Strömung der Flüssigkeit unterbrechen oder verändern könnten, während die vier auf den Kreuzungsbereich zulaufenden Fahrbahnen kurz vor dem Kreuzungsbereich im Strömungskanal im Bereich der Bypässe jeweils eine steuerbare Verschlussklappe aufweisen. Mit Hilfe der Lichtsignalanlage-/Bypasssteuerung kann eine Verschlussklappe den Strömungskanal verschließen oder geöffnet halten, wobei die Hydraulikflüssigkeit dann über den Bypass geleitet wird. Eine solche Lichtsignalanlage-/Bypasssteuerung sorgt für eine Unterbrechung der Strömungsflüssigkeit und somit für eine Unterbrechung der Fahrt eines Modellfahrzeuges und für die Realisierung von Anhaltestellen. Daher sind Anhaltestellen zur Sicherung des Verkehrs mit einer Lichtsignalanlage sowie einer Lichtsignalanlagen-/Bypasssteuerung versehen und die teilweise mit der Steuerung der Zu- und Rückströmstellen gekoppelt sind.

Um an Kreuzungen Lichtsignalanlagen und somit einen Stopp von Modellfahrzeugen zu verwirklichen, ist es notwendig, dass die Strömung der Hydraulikflüssigkeit im Strömungskanal im Bereich der Lichtsignalanlage, beispielsweise einer Ampel, unterbrechbar ist. Dazu ist ein zuschaltbarer Bypass am Strömungskanal vorgesehen, der mit einer vor der Ampel steuerbaren Verschlussklappe gekoppelt ist. Je nachdem, welche Farbe die Ampel aufweist, erfolgt eine Zuströmung der Hydraulikflüssigkeit über den Bypass zur Rückströmstelle. Mit Hilfe solch entsprechend steuerbarer Klappen lassen sich so auch Kreisverkehre einrichten oder Parkplatzanlagen bilden.

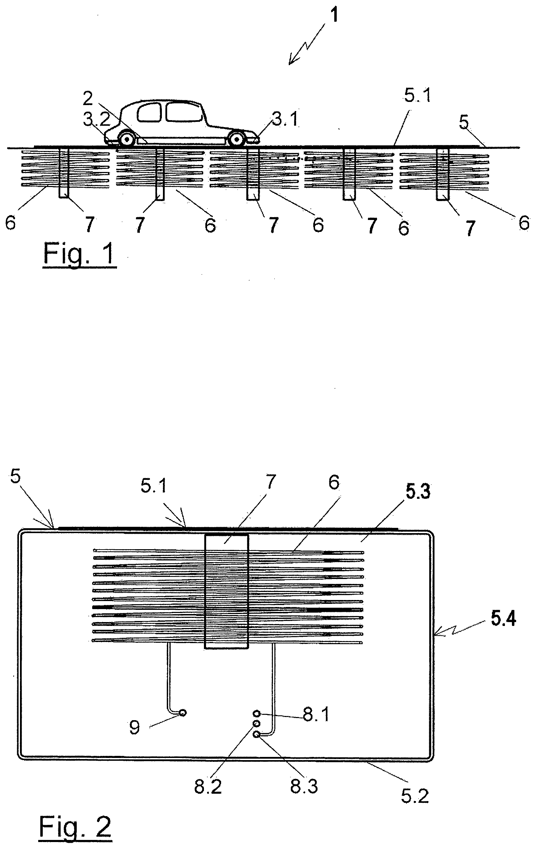

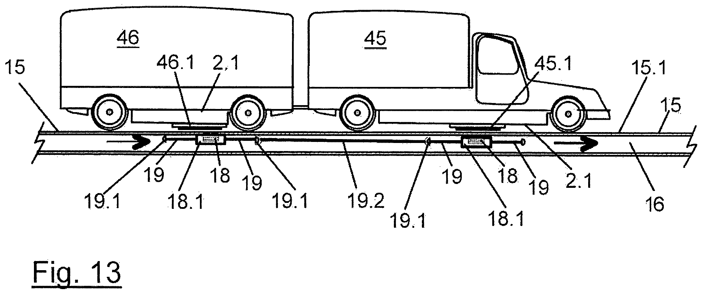

Es versteht sich dabei von selbst, dass neben einem PKW als Modellfahrzeug, wie in den Figuren 1, 4 und 6 dargestellt, auch Modellfahrzeuge bestehend aus LKWs oder anderen Straßenfahrzeugen eingesetzt werden können. An einem solchen LKW, siehe Figur 13, kann auch ein Hänger angekoppelt sein. Um dabei auch die für einen Vortrieb eines solchen Gespanns notwendigen Kräfte zu erhalten, gemäß dem ersten System mit elektromagnetischen Spulen in der Fahrbahn, ist es weiter vorteilhaft, wenn der Hänger einen weiteren ferromagnetischen Materialstreifen aufweist, der in einer solchen Entfernung von dem ferromagnetischen Materialstreifen des LKW angeordnet ist, dass beide gleichzeitig von den gleichsinnig erregten Spulen angezogen werden können. Für das zweite System mit Permanentmagneten in einer strömenden Hydraulikflüssigkeit, ist es vorteilhaft, einen zweiten Schwimmkörper mit Permanentmagnet für den Hänger vorzusehen. Der LKW und der Hänger weisen daher an ihren Unterseiten je einen ferromagnetischen Materialstreifen auf, wobei im Strömungskanal je ein Schwimmkörper mit Permanentmagneten dem LKW und dem Hänger zugeordnet ist. Der zweite Schwimmkörper für den Hänger, kann mit dem ersten Schwimmkörper für den LKW mechanisch gekoppelt sein oder mit entsprechendem Abstandshalter versehen. Dabei entspricht der Abstand der beiden Schwimmkörper bzw. Permanentmagneten im Strömungskanal dem Abstand der beiden ferromagnetischen Materialstreifen zwischen LKW und Hänger. Der Abstand der beiden Permanentmagnete wird durch eine die beiden Schwimmkörper koppelnde Koppelstange sicher gestellt ist, die vorzugsweise die Abstandshalteköpfe der einander zugewandten Abstandshalter formschlüssig erfasst.

Des Weiteren sind im Strömungskanal verstellbare Klappen zur Realisierung einer Einfahrt in eine einspurige Fahrbahn bzw. einer Ausfahrt aus einer einspurigen Fahrbahn in eine zweispurige Fahrbahn oder zur Realisierung von Abzweigungen vorgesehen. Beispielsweise, wenn, wie zuvor beschrieben, zwei nebeneinander für die Hin- und Rückfahrt angeordnete zweispurige Fahrbahnen zu einer einspurigen Fahrbahn zusammengeführt werden, welche für den Hin- und Rückverkehr geeignet ist. Um Kollisionen bei den Modellfahrzeugen im Gegenverkehr zu vermeiden, sind entsprechend an der Fahrbahn angeordnete Anhaltestellen und in den Strömungskanälen verstellbare Klappen notwendig.

Mit diesen Abzweigungen lassen sich Kreisverkehre realisieren. Dazu sind an einem kreisförmigen Strömungskanal Abzweigungen ausgebildet, bei denen die Weiterfahrt im Kreisverkehr, wie auch die Ausfahrt aus diesem durch die verstellbaren Klappen einstellbar sind. Die Abzweigungen an einem kreisförmigen Strömungskanal bilden mit diesem die Fahrbahn für den Kreisverkehr. Verstellbare Klappen werden auch zur Realisierung von Parkplätzen eingesetzt.

Eine Parkplatzanlage, deren Zufahrt und Ausfahrt über eine Stellklappe geregelt ist, weist i.d.R. mehrere Stellplätze für Modellfahrzeuge auf. Die Einfahrten zu den Stellplätzen sind mit einer verstellbaren Klappe zur Auswahl des Abstellplatzes versehen, wobei für das Einfahren im Bereich der Zufahrt eine Zuströmstelle und im Bereich der Stellplätze dazu korrespondierende Rückströmstellen sowie für das Ausfahren im Bereich der Stellplätze Zuströmstellen und im Bereich der Ausfahrt eine dazu korrespondierende Rückströmstelle vorgesehen sind.

Mit einem parallel zum Strömungskanal angeordneten Bypass mit verstellbarer Klappe, lassen sich Anhaltestellen realisieren. Dabei sperrt die verstellbare Klappe die Strömung der Hydraulikflüssigkeit durch den Bypass, so dass die Hauptströmung im Strömungskanal erhalten bleibt. Durch Verstellung einer Klappe wird der Bypass am Strömungskanal geöffnet und der größte Anteil der Hydraulikflüssigkeit aus der Hauptströmung wird umgeleitet. Die Hauptströmung wird so bis zum Verschwinden verringert, so dass der Permanentmagnet zur Ruhe kommt und der Vortrieb für das Fahrzeug ebenfalls stoppt. Solche Anhaltestellen erlauben zur Sicherung des Verkehrs in der Modellbauanlange, die Bildung von Lichtsignalanlagen an Kreuzungen, Kreisverkehren, usw., die zusammen mit Bypässen und Verschlussklappen bzw. verstellbaren Klappen über eine Steuerung geregelt werden. Weitere Anwendungen finden solche Verstellklappen in der Hauptströmung bei der Verwirklichung von Parkplatzanlagen. Hier regeln solche verstellbaren Klappen die Einfahrt in bzw. die Ausfahrt aus einer Parkplatzanlage und die Zufahrt zu den einzelnen Abstellplätzen für Modellfahrzeuge.

Die Erfindung wird an Hand der in den Figuren 6 bis 13 dargestellten Ausführungsbeispiele näher erläutert. Die Ausführungsbeispiele in den Figuren 1-5 sind nicht Teil der Erfindung. Dabei zeigen in schematischer Darstellung die
- Fig. 1: ein Modellfahrzeug auf einer Fahrbahn mit integriertem elektromagnetischem Vortrieb, und
- Fig. 2: ein Fahrbahnsegment im Querschnitt, und
- Fig. 3: ein Fahrbahnsegment als Längsschnitt in Draufsicht, und
- Fig. 4: ein Modellfahrzeug mit elektromagnetischem Vortrieb in der Fahrbahn in Seitenansicht, und
- Fig. 5: einen Kreuzungsbereich für den elektromagnetischen Vortrieb, und
- Fig. 6: ein Modellfahrzeug auf einer Fahrbahn mit integriertem, permanentmagnetischen Vortrieb, und
- Fig.7: das Grundprinzip mit Kanalsystem und Fahrbahn-Schema mit Hydraulikumlauf, und
- Fig. 8: einen Kreuzungsbereich für den permanentmagnetischen Vortrieb, und
- Fig.9: einen Strömungskanal mit Bypass und Lichtsignalanlage für den permanentmagnetischen Vortrieb, und
- Fig. 10: einen Kreisverkehr mit Verstellklappen zur Wahl der Ausfahrt für den permanentmagnetischen Vortrieb, und
- Fig. 11: eine Zusammenführung von zwei Strömungskanälen bzw. zweier Fahrbahnen zu einem Strömungskanal und somit zu einer einbahnigen Fahrbahn für den permanentmagnetischen Vortrieb, und
Fig. 11a Fahrt aus einer zweispurigen Fahrbahn, aufgrund einer Verstellklappe, auf eine einspurige Fahrbahn, und Fig. 11b Fahrt aus einer einspurigen Fahrbahn auf eine zweispurige Fahrbahn mit Auswahl der Fahrspur aufgrund einer Verstellklappe, und
- Fig. 12:: Parkplatzanlage für den permanentmagnetischen Vortrieb, und
- Fig. 13:: Fahrbahn mit permanentmagnetischem Vortrieb mit LKW und Hänger.

Die **Figur 1** zeigt schematisiert als Modellfahrzeug **1** einen PKW auf einer Fahrbahn **5,** die mit elektromagnetischen Spulen **6** in der Fahrbahn **5** versehen ist und die für den elektromagnetischen Vortrieb eines Modellfahrzeuges **1,** welches ohne eigenen Antrieb ausgestattet ist, sorgt. Das von den elektromagnetischen Spulen **6** erzeugte magnetische Feld wirkt mit den beiden ferromagnetischen Materialstreifen **3.1, 3.2** eines Modellfahrzeuges **1** zusammen. Einer von den beiden ferromagnetischen Materialstreifen **3.1, 3.2** ist als vorderer **3.1** und der Andere ist als hinterer ferromagnetischer Materialstreifen **3.2** an der Unterseite **2** des Modellfahrzeugs **1** dicht über der Fahrbahn **5** angeordnet. Aufgrund der geringen Länge der Modellfahrzeuge **1** und des notwendigen Abstandes zwischen dem vorderen und hinteren ferromagnetischen Materialstreifen **3.1, 3.2,** sind die rechteckigen ferromagnetischen Materialstreifen **3.1, 3.2** quer unter dem Modellfahrzeug **1** angeordnet. D.h., die Länge eines ferromagnetischen Materialstreifens **3.1, 3.2** verläuft parallel zur Stoßstange bzw. zur Front- und Heckseite eines Modellfahrzeuges **1** und beträgt in etwa 5 mm - 10 mm, vorzugsweise 8 mm, während die Breite eines ferromagnetischen Materialstreifens **3.1, 3.2** in etwa 1 mm - 5 mm, vorzugsweise 2 mm, beträgt. Die Materialstärke eines ferromagnetischen Materialstreifens **3.1, 3.2** liegt in etwa in dem Bereich 0,1 mm bis 0.8 mm, vorzugsweise 0,2 mm. In die Fahrbahn **5** sind zum Erzeugen eines elektromagnetischen Vortriebs für ein Modellfahrzeug **1** elektromagnetische Spulen **6** angeordnet, die unmittelbar unter der Oberseite der Fahrbahn **5** liegen und in sehr geringem Abstand zu den ferromagnetischen Materialstreifen **3.1** und **3.2** unterhalb eines Modellfahrzeugs **1** stehen. Die elektromagnetischen Spulen **6** werden auf ihrer Oberfläche, die in Richtung der Modellfahrzeuge **1** weisen, gespachtelt, geschliffen und anschließend mit einer Fahrbahnfolie **5.1** versehen, die vorzugsweise verklebt wird. Die Fahrbahn **5** selbst besteht daher aus einer dünnen Kunststofffolie **5.1** mit einer Dicke im Bereich von 0,05 mm bis 0,5 mm, vorzugsweise von 0,2 mm. Die **Figur 1** zeigt weiterhin eine Fahrbahn **5** mit einer Anzahl von dicht aneinander liegenden elektromagnetischen Spulen **6** mit jeweils einem zentrisch angeordneten ferromagnetischen Kern **7,** wobei es sich von selbst versteht, dass sich diese Spulenanordnung über die gesamte Länge der Fahrbahn **5** erstreckt, die aus einzelnen zusammenstellbaren Fahrbahnsegmenten gebildet wird.

Die **Figur 2** zeigt schematisiert ein Fahrbahnsegment **5.4** im Querschnitt. Das Fahrbahnsystem umfasst einzelne flächig ausgebildete, mindestens zwei Verbindungskanten aufweisende Fahrbahnsegmente **5.4,** die es in unterschiedlichen Ausbildungen gibt. Eine Ausbildung betrifft die Fahrbahnsegmente **5.4** für den geradeaus verlaufenden Betrieb der Modellfahrzeuge **1,** und eine andere Ausbildung von Fahrbahnsegmenten **5.4** betrifft die Kurvenbereiche. Die Fahrbahnsegmente **5.4** gibt es in unterschiedlichen Baulängen. Die Baulängen für Straßenabschnitte können von 75 mm bis zu 225 mm betragen.

Zum Einen zeigt das Fahrbahnsegment **5.4** im Querschnitt einen, die Fahrbahn **5** bildenden Kanal **5.2** mit den in Reihe innen und hintereinander liegenden angeordneten elektromagnetischen Spulen **6** mit ferromagnetischem Kern **7** und deren Versorgung über eine der Spannungszuleitungen **8.1, 8.2** oder **8.3** und eine Spannungsrückleitung **9** und zeigt zum Anderen, dass oberhalb der elektromagnetischen Spulen **6** eine Fahrbahnfolie **5.1** angeordnet ist. Aus Übersichtlichkeitsgründen ist zwischen der elektromagnetischen Spule **6** und der Fahrbahn **5** ein Luftspalt eingezeichnet, der praktisch nicht vorhanden ist. Die elektromagnetischen Spulen **6** befinden sich so nah wie möglich an der Fahrbahnunterseite **5** und werden nur durch eine dünne, geglättete Spachtelschicht **5.3** von der Fahrbahnfolie **5.1** getrennt.

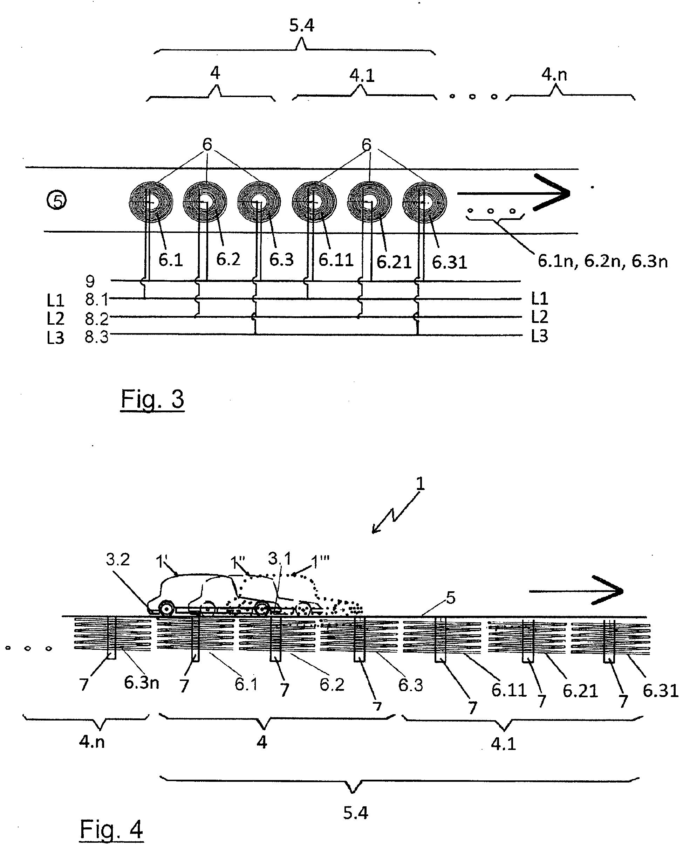

In der **Figur 3** wird in schematisierter Draufsicht und in der **Figur 4** in schematisierter Seitenansicht ein Ausschnitt eines linearen Fahrbahnsegmentes mit elektromagnetischem Vortrieb eines Modellfahrzeuges **1** dargestellt. Daraus ist ersichtlich, dass jeweils drei elektromagnetische Spulen **6** zu einer Baugruppe **4, 4.1, 4.n,** auch **als** "Dreier-Baugruppe" bezeichnet, zusammengefasst sind, wobei jede der einzelnen elektromagnetischen Spulen **6** eine gewickelte Spule ist, die zur Konzentration des magnetischen Feldes mit einem ferromagnetischen Kern **7** versehen ist. Mehrere Baugruppen **4, 4.1, 4.n** vorteilhaft zusammen gefasst, bilden wiederum ein Fahrbahnsegment **5.4,** woraus eine Modellbauanlage erstellt werden kann.

Um einen Vortrieb eines Modellfahrzeuges **1** zu erreichen, werden die elektromagnetischen Spulen **6** in Baugruppen **4, 4.1** bis **4.n** zusammengefasst und so geschaltet, dass jeweils eine der elektromagnetischen Spulen **6** mit dem am Modellfahrzeug **1** angeordneten hinteren oder dem vorderen ferromagnetischen Materialstreifen **3.1, 3.2** abwechselnd zusammenwirkt und diesen in das, dieser elektromagnetischen Spule **6** zugeordnete Feldmaximum, zieht. Dabei ist der Abstand des vorderen ferromagnetischen Materialstreifens **3.1** von dem hinteren ferromagnetischen Materialstreifen **3.2** beim Modellfahrzeug **1** so gewählt, dass der Eine dieser ferromagnetischen Materialstreifen **3.1** bzw. **3.2** im Feldmaximum einer der elektromagnetischen Spulen **6** liegt, während der Andere der ferromagnetischen Materialstreifen **3.2** bzw. **3.1** im Feldminimum zwischen zwei elektromagnetischen Spulen **6** zu liegen kommt. Der Abstand der beiden ferromagnetischen Materialstreifen **3.1, 3.2** am Modellfahrzeug **1** wird also von den Durchmessern der elektromagnetischen Spulen **6.1, 6.2** und **6.3** bestimmt. Um Modellfahrzeuge **1** in einem Maßstab kleiner 1:87 herzustellen, werden einerseits die ferromagnetischen Materialstreifen **3.1, 3.2** am äußersten vorderen und hinteren Bereich der Stoßstangen angeordnet und andererseits werden entsprechend klein gewickelte elektromagnetische Spulen **6.1, 6.2, 6.3** in der Fahrbahn **5** verwendet. Solche elektromagnetischen Spulen **6.1, 6.2, 6.3** weisen einen Durchmesser im Bereich von 5 mm bis zu 15 mm auf, wobei die Durchmesser der ferromagnetischen Kerne 7 im Bereich von 0,5 mm bis zu 1,5 mm liegen. Die Anzahl der Wicklungen einer elektromagnetischen Spule **6.1, 6.2, 6.3** liegt im Bereich von 125 bis 500, wobei eine Kupferdrahtstärke im Bereich von 0,1 mm bis zu 0,3 mm zur Anwendung kommt. Die Höhe solcher Spulen beträgt in etwa 3 mm - 10 mm, vorzugsweise 5 mm.

Gemäß der **Figur 3** und der **Figur 4** bilden dazu jeweils drei aufeinander folgende elektromagnetische Spulen **6.1, 6.2, 6.3, 6.11, 6.21, 6.31** bis **6.1 n, 6.2n, 6.3n** eine Baugruppe **4, 4.1,** bis **4.n,** wobei die erste der elektromagnetischen Spulen **6.1** mit der Spannungszuleitung L1 **8.1,** die zweite der Spulen **6.2** mit der Spannungszuleitung L2 **8.2** und die dritte der Spulen **6.3** mit der Spannungszuleitung L3 **8.3** verbunden ist und somit eine Baugruppe **4** bilden. Die anderen zu "Dreier-Baugruppen" **4.1** bis **4.n** zusammengefassten Spulen **6.11, 6.21** und **6.31** bis **6.1 n, 6.2n** und **6.3n,** sind in gleicher Weise mit den Spannungszuleitungen L1 **8.1,** L2 **8.2** und L3 **8.3** verbunden. Die Spannungsrückleitung **9** erfolgt für die drei Spulen **6.1, 6.2** und **6.3** sowie für alle anderen elektromagnetischen Spulen bis **6.1 n, 6.2n, 6.3n** gemeinsam über die Spannungsrückleitung **9.** Somit sind alle ersten elektromagnetischen Spulen **6.1, 6.11** bis **6.1 n** der Baugruppen **4, 4.1** bis **4.n,** alle zweiten elektromagnetischen Spulen **6.2, 6.21** bis **6.2n** der Baugruppen **4, 4.1** bis **4.n** und alle dritten elektromagnetischen Spulen der Baugruppen **4, 4.1** bis **4.n** elektrisch parallel geschaltet.

Bei einer solchen Schaltung erfolgt die Erregung jeder der ersten, zweiten und dritten elektromagnetischen Spulen **6.1, 6.11,** bis **6.1 n** sowie **6.2, 6.21,** bis **6.2n** und **6.3, 6.31,** bis **6.3n** einer jeder dieser Baugruppen **4, 4.1** bis **4.n,** in der Schaltfolge L1 - L3 - L2. D.h., jede elektromagnetische Spule **6.1,** Spule **6.3,** Spule **6.2** wird über die einzeln zu- und abschaltbaren Spannungszuleitungen **8.1, 8.2** bzw. **8.3** geschaltet. Wie aus der **Figur 4** ersichtlich, bewirkt die Schaltfolge L1 - L3 - L2 innerhalb einer Baugruppe **4** eine Bewegung des Modellfahrzeuges **1,** schematisiert dargestellt als PKW. Das Modellfahrzeug **1'** befindet sich in der **Figur 4** auf einer ersten angedachten Start-Position **1**' mit seinem hinteren ferromagnetischen Materialstreifen **3.2** im Bereich des Feldminimums zwischen der hinteren elektromagnetischen Spule **6.3n** der "Dreier-Baugruppe" **4.n** und der folgenden elektromagnetischen Spule **6.1** der "Dreier-Baugruppe" **4,** während sich der vordere ferromagnetische Materialstreifen **3.1** im Bereich des Feldmaximums der folgenden elektromagnetischen Spule **6.2** der gleichen "Dreier-Baugruppe" **4** befindet. In der Startposition **1'** sind keine der Spannungsleitungen **8.1, 8.2, 8.3** geschaltet. Das Zuschalten von L1 auf der Spannungsleitung **8.1** bewirkt ein Zuschalten von Strom und damit das Erregen der elektromagnetischen Spule **6.1.** Damit wird der hintere ferromagnetische Materialstreifen **3.2** von dem Magnetfeld der elektromagnetischen Spule **6.1** übernommen und in dessen Feldmaximum gezogen. Das Modellfahrzeug **1** erreicht die zweite Position **1".** In der zweiten Position **1"** ist der ferromagnetische Materialstreifen **3.2** im Bereich des Feldmaximums der elektromagnetischen Spule **6.1** angelangt, während der vordere ferromagnetische Materialstreifen **3.1** den Spalt zwischen der elektromagnetischen Spule **6.2** und der elektromagnetischen Spule **6.3** erreicht hat. Nach dem Abschalten von Strom L1 auf der Spannungsleitung **8.1** und dem Zuschalten von Strom L3 auf der Spannungsleitung **8.3** und dem Erregen der elektromagnetischen Spule **6.3,** erreicht das Modellfahrzeug **1** nach weiterer Vorwärtsbewegung seine neue Position **1**"'. In dieser dritten Position **1**'" hat der hintere ferromagnetische Materialstreifen **3.2** den Spalt zwischen der elektromagnetischen Spule **6.1** und der elektromagnetischen Spule **6.2,** den Bereich des Feldminimums, erreicht, während der vordere ferromagnetische Materialstreifen **3.1** sich über dem Kernbereich **7,** dem Bereich des Feldmaximums der elektromagnetischen Spule **6.3,** befindet. Nach dem Abschalten von L3 auf der Spannungsleitung **8.3** bzw. der Abschaltung der Erregung der elektromagnetischen Spule **6.3** und dem Zuschalten von L2 auf der Spannungsleitung **8.2** und somit der Erregung der elektromagnetischen Spule **6.2,** erreicht das Modellfahrzeug **1** nach weiterer Vorwärtsbewegung seine neue Position. Dabei gelangt der hintere ferromagnetische Materialstreifen **3.2** über dem Kernbereich **7** in den Bereich des Feldmaximums der elektromagnetischen Spule **6.2** und der vordere ferromagnetische Materialstreifen **3.1** zwischen der elektromagnetischen Spule **6.3** und der elektromagnetischen Spule **6.11** der weiteren Baugruppe **4.1,** in den Bereich des Feldminimums. Die Schaltfolge L1 - L3 - L2 für die weitere Vorwärtsbewegung eines Modellfahrzeuges **1** wiederholt sich jetzt. Geschaltet wird jetzt wieder das L1 bzw. die Erregung der elektromagnetischen Spule **6.11,** wie zuvor schon aufgezeigt, über die Spannungszuleitung **8.1** der Baugruppe **4.1,** bis das Modellfahrzeug **1** seine nächste Position erreicht hat. Im Anschluss daran wird L1 aus der Baugruppe **4.1** abgeschaltet und L3 aus der Baugruppe **4** über die Spannungsleitung **8.3** zugeschaltet bzw. erfolgt eine Erregung der elektromagnetischen Spule **6.3** aus der Baugruppe **4,** bis das Modellfahrzeug die nächste Position erreicht hat. Dann erfolgt das Abschalten von L3 bzw. der elektromagnetischen Spule **6.3** aus der Baugruppe 4, und L2 bzw. die elektromagnetische Spule **6.21** aus der Baugruppe **4.1** wird über die Spannungszuleitung **8.2** zugeschaltet. Nach dem Abschalten von L2 folgt wieder die Schaltfolge L1 - L3 - L2.

Dieses Spiel setzt sich also in den nächsten Baugruppen **4.1** bis zur Baugruppe **4.n** der Spulen **6.11, 6.21, 6.31** bis zu den Spulen **6.1n, 6.2n, 6.3n** fort, so dass mit angepasster Schaltgeschwindigkeit eine gewünschte Geschwindigkeit des Vortriebs eines Modellfahrzeuges **1** erreicht wird.

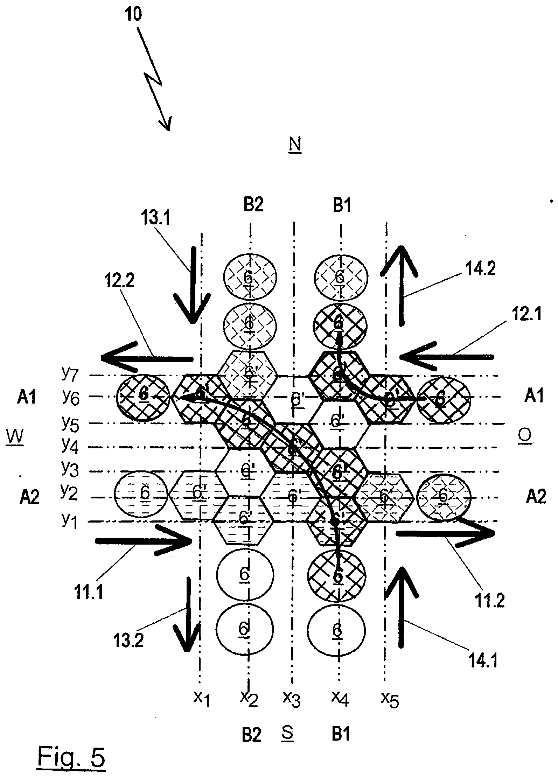

In **Figur 5** ist in schematischer Darstellung eine Kreuzung **10** für Modellfahrzeuge **1** mit elektromagnetischem Vortrieb aufgezeigt, bei der sich zwei Straßen mit jeweils zwei Fahrbahnen **A1, A2, B1, B2** entgegengesetzter Fahrtrichtung im Winkel von 90 Grad kreuzen. Die elektromagnetischen Spulen **6** der aufeinander zulaufenden Fahrbahnen **A1, A2, B1, B2** sind im Kreuzungsbereich in sechseckiger Form **6'** wabenähnlich zusammengefügt. Dies ermöglicht eine engere Packung der elektromagnetischen Spulen **6',** die dadurch ein Abbiegen eines Modellfahrzeuges **1** nach rechts oder links ermöglichen. Bei der Wahl einer Fahrtrichtung in der Kreuzung **10,** z.B. geradeaus oder abbiegen, werden die entsprechenden an die zulaufende Fahrbahn **A1, A2, B1, B2** angrenzenden Spulenwaben **6'** mit Übergang zu den elektromagnetischen Spulen **6** der abführenden Fahrspur erregt. Nähert sich beispielsweise ein Modellfahrzeug **1** von Westen her kommend dem Bereich der Kreuzung **10** an, und wird diese geradeaus fahrend gen Osten hin passieren, erfolgt die Erregung der Spulen **6, 6'** folgenderweise. Die Spur der Erregung (ohne deren Abfolge) ist durch gerade Strichlung der Füllung der elektromagnetischen Spulen **6** bzw. **6'** dargestellt. Das Modellfahrzeug **1** wird von der letzten Spule **6** in **y₂** der Fahrspur **11.1** an die Spule **6'** in **x₁/y₂** des Bereiches der Kreuzung **10** übergeben und weiter an die Spule **6'** in **x₂/y_{1,}** um über die Spule **6'** in **x₃/y₂** und die Spule **6'** in **x₄/y₁** zur Spule **6'** in **x₅/y₂** zu gelangen und von da aus in die erste Spule **6** in **y₂** der weiterführenden Fahrspur **11.2** zu gelangen. Ein weiteres Modellfahrzeug **1** nähert sich dem Bereich der Kreuzung **10** von Osten her kommend auf der Fahrspur **12.1** und möchte als Rechtsabbieger die Kreuzung **10** nach Norden hin verlassen. Die Spur der Erregung (ohne deren Abfolge) ist durch gekreuzte Strichlung der Füllung der elektromagnetischen Spulen **6** bzw. **6'** dargestellt. Das Modellfahrzeug **1** wird von der letzten Spule **6** in **y₆** der Fahrspur **12.1** an die erste Spule **6'** in **x₅/y₆** der Kreuzung **10** übernommen und entsprechend an die Spule **6'** in **x₄/y₇** weiter gegeben, um von dieser an die erste Spule **6** in **x₄** der weiterführenden Fahrspur **14.2** zu gelangen. Ein drittes Modellfahrzeug **1** nähert sich vom Süden her kommend dem Bereich der Kreuzung **10** an, um in Richtung Westen weiterzufahren. Dieser Linksabbieger wird von der letzten Spule **6** in **x₄** der Fahrspur **14.1** zur Spule **6'** in **x₄/y₁** übergeben und von dort zur Spule **6'** in **x₄/y_{3,}** dann zur Spule **6'** in **x₃/y₄** und zur Spule **6'** in **x₂/y₅** weitergeführt, um über die letzte Spule **6**' in **x₁/y₆** an die erste Spule **6** in **y₆** der weiterführenden Fahrbahn **12.2** zu gelangen, um den Bereich der Kreuzung **10** zu verlassen und in Richtung Westen weiter zu fahren. Die zuvor angegebenen Fahrtrichtungen sind beispielhaft aufgeführt. Natürlich kann ein Modellfahrzeug **1** aus den verschiedenen Richtungen der Fahrbahnen **A1, A2, B1, B2** kommend, die Kreuzung **10** überqueren und in allen anderen möglichen Richtungen verlassen, z.B. in die Spur als Links- und Rechtsabbieger wechseln oder geradeaus fahren. Die Fahrtrichtungsänderungen eines Modellfahrzeuges **1** in der Kreuzung **10** werden durch eine Matrixsteuerung (nicht dargestellt) ermöglicht, welche die einzelnen elektromagnetischen Spulen **6, 6'**enstsprechend einem Algorithmus ansteuert.

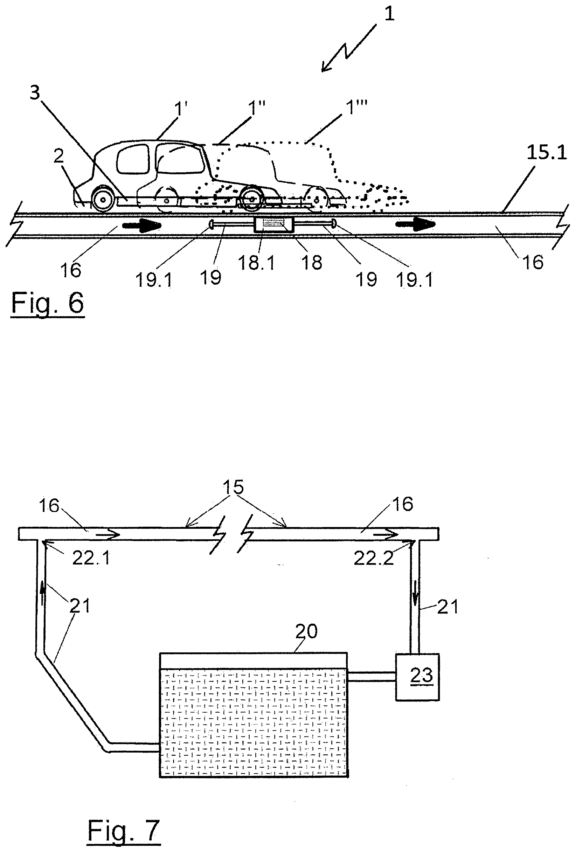

Die **Figuren 6 und 7** zeigen das Grundprinzip der zweiten Ausführungsform eines Systems mit auf einer Fahrbahn **15** ohne Eigenantrieb bewegbaren Modell-und/oder Spielfahrzeugen **1.** Dabei ist in **Figur 6** **-** entsprechend zu der **Figur 1** **-** ein PKW als Modellfahrzeug **1** auf einer Fahrbahn **15** für permanentmagnetischen Vortrieb dargestellt, die von der Oberseite eines Strömungskanals **16** gebildet ist. In diesem Strömungskanal **16** befindet sich ein Permanentmagnet **18,** dessen magnetisches Feld mit einem, an einer Modellfahrzeug 1-Unterseite sehr dicht über der Fahrbahn **15** angeordneten ferromagnetischen Materialstreifen **3,** zusammenwirkt und diesen im magnetischem Feldbereich hält. Um einen Vortrieb zu erreichen, wird der Permanentmagnet **18** von einer im Strömungskanal **16** strömenden Hydraulikflüssigkeit mit genommen. Dabei ist es vorteilhaft, wenn der Permanentmagnet **18** an der Oberseite eines Schwimmkörpers **18.1** angeordnet ist und so immer unter der, die Fahrbahn **15** bildenden oberen Wand des Strömungskanals **16** und somit nahe dem ferromagnetischen Materialstreifen **3,** gehalten ist. Dieser Permanentmagnet **18** mit dem Schwimmkörper **18.1** wird mit der, im Strömungskanal **18** strömenden Hydraulikflüssigkeit, mitgenommen und bewirkt über die magnetische Kopplung zwischen dem Permanentmagneten **18** und dem ferromagnetischen Materialstreifen **3** den Vortrieb des Fahrzeugs **1.** In **Figur 6** ist entsprechend der **Figur 4** ein Bewegungsablauf angedeutet. Das Modellfahrzeug **1** befindet sich zunächst in der Position **1'**, wird von dem Vortrieb durch den mit der Hydraulikflüssigkeit mitgenommenen Permanentmagneten **18** in die Position **1"** (strichpunktiert) und schließlich in die Position **1'"** (punktiert) gebracht, wobei es sich von selbst versteht, dass damit die Bewegung lediglich in einem Teilbereich der Fahrbahn **15** dargestellt werden kann.

Gemäß der **Figur 7** ist für die Hydraulikflüssigkeit ein Vorratsbehälter **20** vorgesehen, der über Zuström- und Rückströmleitungen **21** an dem Strömungskanal **16** der Fahrbahn **15** angeschlossen ist. Hydraulikflüssigkeit wird dem Strömungskanal **16** an einer Rückströmstelle **22.2** abgezweigt bzw. abgesaugt und von einer Pumpe **23** über die Zu- bzw. Rückströmleitungen **21** durch den Vorratsbehälter **20** geführt. Die Pumpe **23** erzeugt beim Ansaugen der Hydraulikflüssigkeit an der Rückströmstelle **22.2** einen gewissen (bestimmten) Unterdruck und wirkt als Saugpumpe **23,** wodurch die Hydraulikflüssigkeit in den Strömungskanälen **16** angesaugt wird und wodurch der Flüssigkeitskreislauf in Bewegung gehalten wird. Für alle Rückströmstellen **22.2** gilt also, dass diese als Ansaugpunkte für die Hydraulikflüssigkeit dienen und somit für den permanentmagnetischen Vortrieb eines Modellfahrzeuges **1** sorgen.

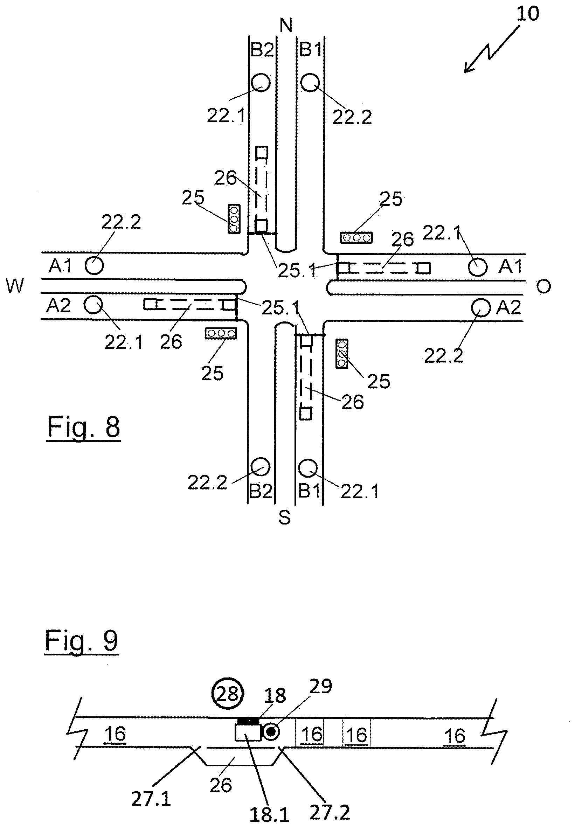

Die **Figuren 8 und 9** zeigen die Ausführungsform einer, durch eine Lichtsignalanlage **25** geregelten Kreuzung **10,** der Straßen **"A"** und **"B"** für den permanentmagnetischen Vortrieb eines Modellfahrzeuges **1.** Vor der Kreuzung **10** befinden sich in den zuführenden Fahrbahnen dieser Straßen **"A"** und **"B"** Zuströmstellen **22.1,** in den von der Kreuzung **10** abführenden Fahrbahnen befinden sich Rückströmstellen **22.2.** Jede dieser Zuströmstellen **22.1** und Rückströmstellen **22.2** kann dabei gesondert geöffnet oder geschlossen gehalten werden. Ist beispielsweise die Zuströmstelle **22.1** der auf die Kreuzung **10** aus dem Norden zuführenden Fahrbahn **B2** offen, strömt dort Hydraulikflüssigkeit zu und hält die Hydraulikflüssigkeit in Richtung auf die Kreuzung **10** in Bewegung. Der auf das Modellfahrzeug **1** wirkende Vortrieb durch den, von der Hydraulikflüssigkeit mitgenommenen Permanentmagneten **18,** weist auch in Richtung der Kreuzung **10.** Ist nun die Rückströmstelle **22.2** für die Hydraulikflüssigkeit in der weiterführenden Fahrbahn **B2** in Richtung Süden für die Hydraulikflüssigkeit offen, wirkt diese Rückströmstelle **22.2,** wie in der Figur **7** beschrieben, als Ansaugpunkt und das Modellfahrzeug **1** wird eine Geradeaus-Fahrt vornehmen, wenn alle weiteren Zu- und Rückströmstellen **22.1, 22.2** in den anderen Fahrbahnen **A1, A2, B1** geschlossen sind. Gleiches gilt für alle Geradeaus-Fahrten für die Modellfahrzeuge 1, aus der Richtung Osten kommend und die Kreuzung **10** in Richtung Westen verlassend oder aus Richtung Süden kommend und in Richtung Norden weiterfahrend sowie aus Richtung Westen kommend und die Kreuzung **10** in Richtung Osten verlassend. Bei Geradeaus-Fahrten sind jeweils in der Fahrbahn **A1** die Zuströmstelle **22.1** und Rückströmstelle **22.2** für die Hydraulikflüssigkeit geöffnet und alle anderen Zu- und Rückströmstellen **22.1, 22.2** sind geschlossen oder in der Fahrbahn **A2** geöffnet und in **A1, B1, B2** geschlossen, oder in **B1** geöffnet und in **A1, A2, B2** geschlossen usw. Diese Schaltungsfolge der Zu- und Rückströmstellen **22.1, 22.2** und die sich daraus ergebende Strömung der Hydraulikflüssigkeit gelten für im Kreuzungsbereich **10** geradeaus fahrende Modellfahrzeuge **1.** Ist die Bauform der Kreuzung **10** derart ausgebildet, dass auch ein Links- und Rechtsabbiegen von Modellfahrzeugen ermöglicht wird, sind auch andere Schaltungsfolgen in den verschiedenen Fahrbahnen **A1, A2, B1, B2** und somit andere Strömungsrichtungen für die Hydraulikflüssigkeit möglich. Bei einer solchen konzipierten Kreuzung kann, wenn die Zuströmstelle **22.1** in der Fahrbahn **B2** geöffnet ist, z.B. die Rückströmstelle **22.2** der abführenden Fahrbahn **A1** in Richtung Westen offen sein und die Rückströmstelle **22.2** der abführenden Fahrbahn **B2,** sowie alle anderen Rückströmstellen **22.2** können geschlossen, wodurch eine Rechtsabbiegung des Modellfahrzeuges **1** erfolgt. Ist die Rückströmstelle **22.2** der abführenden Fahrbahn **A2** hingegen geöffnet und sind alle anderen Zu- und Rückströmstellen **22.1, 22.2** in den Fahrbahnen **A1, B1, B2** geschlossen, wird das Modellfahrzeug **1** eine Linksabbiegung vornehmen. Gleiches gilt wieder für ein Modellfahrzeug **1,** welches z.B. aus Richtung Osten kommend, als Rechtsabbieger die Kreuzung **10** in Richtung Norden oder als Linksabbieger in Richtung Süden verlassen kann oder, aus Richtung Süden kommend, als Rechtsabbieger die Kreuzung **10** in Richtung Osten oder als Linksabbieger in Richtung Westen verlassen kann usw. Wenn sich z.B. mehrere Modellfahrzeuge **1** aus verschiedenen Richtungen der Kreuzung **10** nähern, ist es notwendig, die Vorfahrt der Modellfahrzeuge **1** zu regeln. Zur Sicherung der Kreuzung **10** sind hierzu, gemäß der **Figur 8****,** Haltelinien **25.1** und Lichtsignalanlagen **25** vorgesehen.

Um die Kreuzung **10** durch eine Lichtsignalanlage **25** zu sichern, sind vor den Haltelinien **25.1** der Lichtsignalanlagen **25,** gemäß der **Figur 9****,** Bypässe **26,** Verschlussklappen **29** und eine Lichtsignalanlagen-/Bypasssteuerung **28** vorgesehen, wobei die Lichtsignalanlagen-/Bypasssteuerung **28** auch an einer anderen Stelle angeordnet sein kann. Die Bypässe **26** können an einer Entnahmeöffnung **27.1** des Strömungskanals **16** Hydraulikflüssigkeit entnehmen, wenn der Bypass **26** durch die Schaltung der Lichtsignalanlage **25** entsprechend offen und die Verschlussklappe **29** im Strömungskanal **16** geschlossen ist und über die Rückströmöffnung **27.2** umgeleitet wird. Dadurch verringert sich die Menge der durch den Strömungskanal **16** strömenden Hydraulikflüssigkeit an der Anhaltestelle **25.1** und damit die Mitnahme des Schwimmkörpers **18.1** mit dem Permanentmagneten **18.** Der Vortrieb des mitgenommen Modellfahrzeugs **1** wird dadurch abgebremst. Die Dimensionierung des Bypasses **26** erfolgt dabei so, dass bei offenem Bypass **26** der Vortrieb des Modellfahrzeugs **1** (nahezu) verschwindet. Eine Steuerung regelt die Lichtsignalanlagen **25** und die dazugehörigen Bypässe **26,** wodurch für die Modellfahrzeuge **1** eine freie Fahrt auf der Fahrbahn **A1, A2, B1, B2** ermöglicht und/oder ein Fahrstopp verfügt wird.

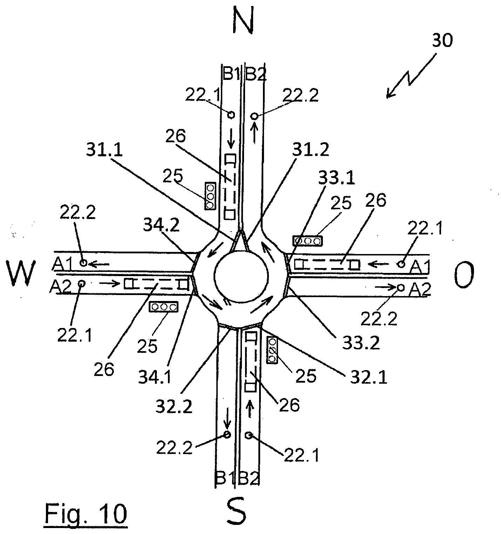

Eine weitere Abwandlung der Kreuzung **10** ist der **Figur 10** zu entnehmen, welche einen Kreisverkehr **30** mit Verstellklappen zur Wahl einer Ausfahrt für den permanentmagnetischen Vortrieb aufzeigt. An den Ein- und Ausfahrten aus dem Kreisverkehr **30,** zwischen den Fahrbahnen, also zwischen **B1-B2** und **A1-A2** sind jeweils zwei verstellbare Klappen **31.1, 31.2, 32.1, 32.2, 33.1, 33.2** und **34.1, 34.2** im Strömungskanal **16** des Kreisverkehres **30** angeordnet. Die verstellbaren Klappen **31.1, 31.2, 32.1, 32.2, 33.1, 33.2, 34.1, 34.2** sorgen einerseits für eine Weiterfahrt im Kreisverkehr **30** und andererseits für die richtige Ausfahrt aus diesem. Anhand von Beispielen soll das System der Verstellklappen **32.1, 32.2, 33.1, 33.2, 34.1, 34.2** und mögliche Fahrtrichtungen für ein Modellfahrzeug **1** erläutert werden. Beispielsweise kommt ein Modellfahrzeug **1** auf der **B1** aus Richtung Norden zum Kreisverkehr **30.** Dieses Modellfahrzeug **1** soll die Ausfahrt der **B2** in Richtung Norden, also auf der Gegenfahrbahn **B2,** wieder verlassen. Um diese Ausfahrt zu erreichen, ist die Verstellklappe **31.1** für die Einfahrt und die Verstellklappe **31.2** für die Ausfahrt geöffnet, wobei die geöffneten Verstellklappen **31.1** und **31.2** am Innenkreis des Kreisverkehres **30** anliegen, während alle anderen Verstellklappen **32.1, 32.2, 33.1, 33.2, 34.1, 34.2** die Öffnungen der Strömungskanäle **16** verschließen. Die Strömung der Hydraulikflüssigkeit hat, bei den zuvor aufgezeigten Stellung der Verstellklappen **32.1, 32.2, 33.1, 33.2, 34.1, 34.2,** wenn die Zuströmstelle **22.1** in der Einfahrt der **B1** und die Rückströmstelle **22.2** in der Ausfahrt der **B2** geöffnet sind, daher nur die Möglichkeit, den Kreisverkehr **30** zu umrunden und die vierte Ausfahrt im Kreisverkehr **30** zu nehmen. Auch hier gilt für alle Rückströmstellen **22.2,** dass diese als Ansaugpunkte für die Hydraulikflüssigkeit dienen und somit für den permanentmagnetischen Vortrieb eines Modellfahrzeuges **1** sorgen.

Der Schwimmkörper **18.1,** der den Permanentmagneten **18** in dem, von den Verstellklappen **32.1, 32.2, 33.1, 33.2, 34.1, 34.2** gebildeten Strömungskanal **16,** auf diesem Weg mitnimmt, verschiebt das Modellfahrzeug **1** auf der Fahrbahn des Kreisverkehrs **30** entsprechend. An einem weiteren Beispiel sei beschrieben, wie ein Modellfahrzeug **1,** wieder aus der Richtung Norden auf der **B1** kommend, die erste Ausfahrt im Kreisverkehr **30** Richtung Westen auf der **A1** verlässt. Die Verstellklappe **31.1** für die Einfahrt, sowie die zugehörige Zuströmstelle **22.1** in der Einfahrt der **B1** und die Verstellklappe **34.2,** sowie die zugehörige Rückströmstelle **22.2** in der Ausfahrt der **A1,** sind geöffnet. Für diese Fahrtrichtung ist die Stellung der anderen Verstellklappen **32.2, 33.1, 33.2, 34.1** normalerweise unerheblich, wobei die Stellung der Verstellklappen **32.2, 33.1, 33.2, 34.1** vorteilhafterweise die Strömungskanäle **16** verschließt. Diese Verstellklappen **32.2, 33.1, 33.2, 34.1** können aber, wenn mehrere Modellfahrzeuge **1** den Kreisverkehr **30** gleichzeitig benutzen und durchfahren sollen, wiederum eine bestimmte Stellung einnehmen. Z.B. könnte gleichzeitig zur Fahrt des Modellfahrzeuges **1** aus Richtung Norden mit Ausfahrt Richtung Westen, ein zweites Modellfahrzeug **1** auf der Fahrbahn **A2** aus Richtung Westen kommend, die Ausfahrt der **B1** in Richtung Süden wieder verlassen. Um dem Modellfahrzeug **1** diese Fahrtrichtung zu ermöglichen, müssten die Verstellklappe **34.1** und die Zuströmstelle **22.1** in der Einfahrt der **A2** und die Verstellklappe **32.2** mit der Rückströmstelle **22.2** in der Ausfahrt der **B1** geöffnet sein. Gleichzeitig könnte auch ein drittes Modellfahrzeug **1,** auf der Fahrbahn **B2** aus Richtung Süden kommend, die Ausfahrt der **A2** in Richtung Osten benutzen. Gleiches trifft auf die Fahrt eines weiteren weiteres) Modellfahrzeuges **1** von der Fahrbahn **A1** über den Kreisverkehr **30** zur Fahrbahn **B2** zu. Auf diese Art und Weise können vier Modellfahrzeuge **1** gleichzeitig den Kreisverkehr **30** befahren. Natürlich kann jedes an den Kreisverkehr **30** ankommende Modellfahrzeug **1,** egal aus welcher Fahrtrichtung, auch jede andere Ausfahrt, z.B. die zweite oder dritte Ausfahrt, benutzen. Dem Erfordernis der vorgesehenen Fahrtrichtung entsprechend, würden die Verstellklappen **32.1, 32.2, 33.1, 33.2, 34.1, 34.2** sowie die Zu- und Rückströmstellen **22.1, 22.2** zur erzeugenden Strömungsrichtung der Hydraulikflüssigkeit, eingestellt.

Dabei sind die Zuströmstellen **22.1** für die Hydraulikflüssigkeit vor der Einfahrt in den Kreisverkehr **30** und die Rückströmstellen **22.2** der Ausfahrt nachgeschaltet vorgesehen, so dass die Strömung der Hydraulikflüssigkeit entsprechend einstellbar ist. Vorteilhafterweise können an den Einfahrten **A1, A2, B1, B2** zum Kreisverkehr **30** auch jeweils eine Signalanlage **25** mit Haltelinie **25.1** und einem Bypass **26** angeordnet sein, wodurch den Modellfahrzeugen **1** eine freie Fahrt in den Kreisverkehr **30** ermöglicht wird und/oder ein Fahrstopp erfolgt. Eine Steuerung regelt die Lichtsignalanlagen **25** und die dazugehörigen Bypässe **26** am Kreisverkehr **30.** Zu den weiteren Ausführungen einer Lichtsignalanlage **25** und einem Bypass **26** wird auf die Beschreibung in der **Figur 8** und **9** verwiesen.

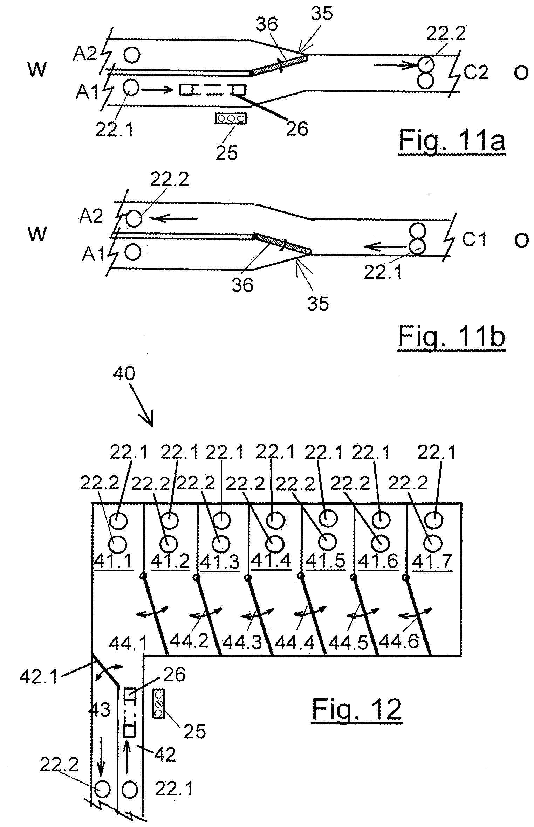

Aus der **Figur 11a** ist eine Zusammenführung von zwei Strömungskanälen **16** bzw. **von zwei**(zweier) Fahrbahnen **A1** und **A2** oder **B1** und **B2** usw. zu einem Strömungskanal **16** und somit zu einer einbahnigen Fahrbahn **C1, C2** ersichtlich. Diese einbahnige Fahrbahn **C1, C2** kann, im Unterschied zu den Fahrbahnen **A1, A2, B1, B2,** von einem Modellfahrzeug **1** in beiden Richtungen befahren werden. Im Beispiel der Figur **11a** soll die Strömung der Hydraulikflüssigkeit im Strömungskanal **16** die Richtung vom Westen nach Osten und somit die Fahrtrichtung des Modellfahrzeuges **1** aufzeigen. Um einem Modellfahrzeug **1** die Ausfahrt aus dem Strömungskanal **16** der **A1** in den Strömungskanal **16** der einspurigen Fahrbahn **C1** zu ermöglichen, verschließt einerseits die Verstellklappe **36** die Öffnung des Strömungskanales **16** der Fahrbahn **A2,** wodurch gleichzeitig die Einfahrt eines Modellfahrzeuges **1** in die Fahrbahn **C1,** ermöglicht wird, und andererseits ist zur Herstellung der Strömungsrichtung in der **A1** die Zuströmstelle **22.1** und in der **C1** die Rückströmstelle **22.2** geöffnet. Auch hier gilt, wie in der **Figur 7** beschrieben, was für alle Rückströmstellen **22.2** gilt, dass diese als Ansaugpunkte für die Hydraulikflüssigkeit dienen und somit für den permanentmagnetischen Vortrieb eines Modellfahrzeuges **1** sorgen.

Ein solcher Fahrtrichtungswechsel von der **A1** zur **C1** ist nur möglich, wenn sich auf der **C1** kein Modellfahrzeug **1** im Gegenverkehr befindet. Sollte das aber der Fall sein, ist eine Kollision der aufeinander zufahrenden Modellfahrzeuge **1** aus der Richtung Westen auf der **A1** und aus der Richtung Osten auf der **C1** kommend, zu vermeiden. Um bei Gegenverkehr Kollisionen zu vermeiden, befindet sich an der **A1** eine Lichtsignalanlage **25,** welche, gemäß den Ausführungen der **Figur 9****,** mit einem Bypass **26** gekoppelt ist, und die den permanentmagnetischen Vortrieb eines Modellfahrzeuges **1** stoppt, bis die Einfahrt in die Fahrbahn **C1** durch die Verstellklappe **36** freigegeben und das sich im Gegenverkehr befindliche Modellfahrzeug 1 die Fahrbahn **C1** verlassen hat.

Um die Weiterfahrt des Modellfahrzeuges **1** aus **A1** nach **C1** zu ermöglichen, muss das Modellfahrzug **1,** siehe **Figur 11b****,** aus der einbahnigen Fahrbahn **C1** zur Weiterfahrt auf die zweibahnige Strecke **A2** wechseln, - da Rechtsverkehr bestehtmuss das Modellfahrzeug **1** in die Fahrbahn **A2** gelangen. Die nun aus der geöffneten Rückströmstelle **22.2** abgesaugte Hydraulikflüssigkeit in der Fahrbahn **A2** strömt aus der geöffneten Zuströmstelle **22.1** der Fahrbahn **C1** in Richtung der Fahrbahnen **A1** und **A2** und wird jedoch durch die umgelegte Verstellklappe **36,** welche die Öffnung des Strömungskanals **16** der **A1** verschließt, in die Fahrbahn **A2** gezwungen, so dass das Modellfahrzeug **1,** dem von der Strömung mitgenommenen Permanentmagneten **18** folgend, in die für diese Fahrrichtung rechte Fahrbahn **A2** gelangt. Sobald das Modellfahrzeug **1** die Fahrbahn **A2** erreicht hat, kann die Lichtsignalanlage **25** den Bypass **26** schließen und die Verstellklappe **36** verschwenken, wodurch der Ausgang der Fahrbahn **A1** freigegeben und der Eingang der Fahrbahn **A2** verschlossen wird. Gleichzeitig schließt in der Fahrbahn **C1** die Zuströmstelle **22.1** und die Rückströmstelle **22.2** wird geöffnet, wodurch die Hydraulikflüssigkeit angesaugt und das Modellfahrzeug, gemäß **Figur 11a****,** die Fahrt in die Fahrbahn **C1** aufnehmen kann.

**Fig. 12** zeigt eine Parkplatzanlage **40** mit 7 Stellplätzen **41.1, 41.2, 41.3, 41.4, 41.5, 41.6** und **41.7** für Modellfahrzeuge **1** mit permanentmagnetischem Vortrieb. Die Stellplätze sind über eine Zufahrt **42** erreichbar. Auf einem der Stellplätze **41.1, 41.2, 41.3, 41.4, 41.5, 41.6, 41.7** parkende Modellfahrzeuge **1** können die Parkplatzanlage **40** über die Ausfahrt **43** verlassen. Die Zufahrt **42** eines Modellfahrzeuges **1** zu einem Stellplatz **41.1, 41.2, 41.3, 41.4, 41.5, 41.6, 41.7** wird durch die Stellung der Stellklappe **42.1** und die Rückströmstellen **22.1** in den Stellplätzen **41.1, 41.2, 41.3, 41.4, 41.5, 41.6, 41.7** sowie die Zuströmstelle **22.1** in der Zufahrt **42** ermöglicht, wobei die zuströmende Hydraulikflüssigkeit an Rückströmstellen **22.2** der Stellplätze **41.1, 41.2, 41.3, 41.4, 41.5, 41.6** und **41.7,** gemäß der **Figur 7****,** abgesaugt wird. Jeder der einzelnen Stellplätze **41.1, 41.2, 41.3, 41.4, 41.5, 41.6** und **41.7** weist eine sich öffnende und schließende Klappe **43.1, 43.2, 43.3, 43.4, 43.5, 43.6** und **43.7** auf, welche die Zuströmung der Hydraulikflüssigkeit zu einem der Stellplatze **41.1, 41.2, 41.3, 41.4, 41.5, 41.6** und **41.7** somit das Anfahren dieses Stellplatzes ermöglicht. Zur Ausfahrt **43** weist jeder der Stellplätze **41.1, 41.2, 41.3, 41.4, 41.5, 41.6** und **41.7** eine Zuströmstelle **22.1** auf, durch die beim Ausparken Hydraulikflüssigkeit zuströmt, weil die in der Ausfahrt **43** geöffnete Rückströmstelle **22.2** die Hydraulikflüssigkeit ansaugt. Durch die Ansaugung der Hydraulikflüssigkeit im Strömungskanal, wird gleichzeitig der, einem Modellfahrzeug **1** zugeordnete Permanentmagnet **18** und somit auch das damit gekoppelte Modellfahrzeug **1,** in Richtung Ausfahrt **43** in Bewegung versetzt. Dieses wird aber nur ermöglicht, weil zwischen der Zufahrt **42** und der Ausfahrt **43** eine Verstellklappe **42.1** angeordnet ist, welche die jeweilige Öffnung der Zu- und Ausfahrt **42, 43** verschließen bzw. öffnen kann, wodurch die Richtung der Strömungsflüssigkeit und somit ein Modellfahrzeug gelenkt wird. Die Zufahrt **42** zum Parkplatz **40** wird durch eine Lichtsignalanlage **25** und den zugehörigen Bypass **26** kontrolliert. Weitere Angaben zur Lichtsignalanlage **25** mit Bypass kann der Beschreibung der **Figur 9** entnommen werden.

Die **Figur 13** zeigt eine Abwandlung eines Modellfahrzeuges. Anstelle der in den **Figuren 1****,** **4** und **6** dargestellten Umrisse eines PKW **1,** ist hier ein LKW **45** im Umriss als Modellfahrzeug **1** für den permanentmagnetischen Vortrieb, dargestellt. Der LKW **45** ist darüber hinaus mit einem Hänger **46** versehen. Um die durch den Hänger **46** vergrößerten Reibungskräfte zu überwinden, sind beide Modellfahrzeuge, der LKW **45** wie auch der Hänger **46,** je mit einem ferromagnetischen Materialstreifen **45.1** und **46.1** versehen, die mit den entsprechenden Permanentmagneten **18** im Strömungskanal **16** zusammenwirken. Jeder der Permanentmagnete **18** ist an der Oberseite eines im Strömungskanal **16** befindlichen Schwimmkörpers **18.1** vorgesehen, so dass jeder Permanentmagnet **18** unmittelbar unter der Fahrbahn **15** geführt ist. Die beiden ferromagnetischen Materialstreifen **45.1** und **46.1** sind an der Unterseite des LKWs **45** und an der Unterseite des Hängers **46** so angeordnet, dass nur ein geringer Abstand zum Permanentmagneten **18** besteht, wodurch eine hinreichende Kraftwirkung sicher gestellt ist. Der Abstand der beiden Permanentmagnete **18** zueinander ist dabei gleich dem Abstand der ferromagnetischen Materialstreifen **46.1** des Hängers **46** zum ferromagnetischen Materialstreifen **45.1** des LKWs **45.** Der Abstand der beiden Permanentmagnete **18** zueinander kann in einer ersten Ausführung durch einen biegsamen Kunststoffstreifen, der die beiden Schwimmkörper **18.1** verbindet, festgelegt werden. In einer zweiten Ausführung kann unter dem LKW **45** sowie dem Hänger **46** ein Schwimmkörper **18.1** mit Abstandshalter **19** gemäß der Ausführung der **Figur 6** angeordnet sein. Bei der Ausführung nach **Figur 6** würde zwischen den beiden Bewegungsantrieben bzw. zwischen dem rückwärts gerichteten Abstandshalter **19** des LKWs **45** und dem vorwärts gerichteten Abstandshalter **19** des Hängers **46** ein Abstand bestehen. In einer dritten Ausführung würde dieser Abstand durch eine Koppelstange **19.2** zwischen den Abstandshaltern **19** der beiden Schwimmkörper **18.1** sicher gestellt. Die Koppelstange **19.2** ist vorteilhaft mittels Formschluss zwischen die Abstandshalteköpfe **19.1** eingefügt. Die Abstandshalteköpfe **19.1** können eine unterschiedliche geometrische Körperform aufweisen, beispielsweise eine quadratische oder eine rechteckige Form oder eine Pyramidenform. Die Abstandshalteköpfe **19.1** weisen vorzugsweise eine zylindrische Form mit Kugelabschnitt auf, die aus einer Halbkugel bestehen kann. Bei der Verwendung von Halbkugeln als Abstandshalteköpfe **19.1** würde der nach vorwärts gerichtete Abstandshaltekopf **19.1** mit seinem Kugelradius in Fahrtrichtung weisen, während der rückwärts gerichtete Abstandshaltekopf **19.1** mit seiner flächigen, ebenen Seite nach hinten weisen würde. Dadurch könnte der nach hinten bzw. rückwärts gerichtete Abstandshaltekopf **19.1** auch aus einem zylindrischen Körper bestehen, weil die nach hinten weisende ebene Fläche dem Kugelkopf des nach vorne gerichteten Abstandshaltekopfes **19.1** als Anlagefläche dient. Der Kugelkopfdurchmesser ist in seiner Größe dem Querschnitt des Strömungskanales angepasst. D.h., bei einem Strömungskanalquerschnitt von ca. 100 mm² soll der Kugelkopfdurchmesser ca. 6 mm betragen. Ist der Strömungskanalquerschnitt größer 100 mm², ist der Kugelkopfdurchmesser entsprechend anzupassen, um ein Vorbeigleiten zweier Abstandshalteköpfe **19.1** zu vermeiden. In der Regel soll die Länge eines Abstandshalters 19 ca. 5 mm länger sein als die Länge eines Modellfahrzeuges **1.** Bei PKW-Modellfahrzeugen **1,** die eine Länge von ca. 28 mm aufweisen, beträgt die Länge des Abstandshalters **19** ca. 33 mm. Bei LKW-Modellfahrzeugen **45,** die eine Länge von ca. 45 mm aufweisen, beträgt die Länge des Abstandshalters **19** ca. 48 mm, usw. Für LKW-Modellfahrzeuge **45** mit Hänger **46** können, wie zuvor beschrieben, zwei Abstandshalter **19** vorgesehen sein, jeweils einer für die Zugmaschine **45** und einer für den Hänger **46.**

### Bezugszeichenliste

- 1: Modellfahrzeug
- 1': Fahrzeug 1 in erster Position
- 1": Fahrzeug 1 in zweiter Position
- 1"': Fahrzeug 1 in dritter Position
- 2: Modellfahrzeug-Unterseite
- 3: ferromagnetische Materialstreifen
- 3.1: vorderer ferromagnetischer Materialstreifen
- 3.2: hinterer ferromagnetischer Materialstreifen
- 4: erste Baugruppe mit drei Spulen 6 (Dreier-Gruppe)
- 4.1: zweite Baugruppe mit drei Spulen 6 (Dreier-Gruppe)
- 4.n: n-te Baugruppe mit drei Spulen 6 (Dreier-Gruppe)
- 5: Fahrbahn für elektromagnetischen Antrieb
- 5.1: Fahrbahnfolien
- 5.2: Kanal
- 5.3: Spachtelschicht
- 5.4: Fahrbahnsegment
- 6: elektromagnetische Spule
- 6': sechseckig Wabenspule
- 6.1: erste Spule einer ersten Baugruppe 4 (erste Dreier-Gruppe)
- 6.11: erste Spule einer zweiten Baugruppe 4.1 (zweite Dreier-Gruppe)
- 6.1n: erste Spule einer n-ten Baugruppe 4.n (n-te Dreier-Gruppe)
- 6.2: zweite Spule einer ersten Baugruppe 4 (erste Dreier-Gruppe)
- 6.21: zweite Spule einer zweiten Baugruppe 4.1 (zweite Dreier-Gruppe)
- 6.2n: zweite Spule einer n-ten Baugruppe 4.n (n-te Dreier-Gruppe)
- 6.3: dritte Spule einer ersten baugruppe (erste Dreier-Gruppe)
- 6.31: dritte Spule einer zweiten Baugruppe 4.1 (zweite Dreier-Gruppe)
- 6.3n: dritte Spule einer n-ten Baugruppe 4.n (n-te Dreier-Gruppe)
- 7: ferromagnetischer Kern
- 8.1: Spannungszuleitung
- 8.2: Spannungszuleitung
- 8.3: Spannungszuleitung
- 9: Spannungsrückleitung 13
- 10: Kreuzung
- 11.1: Fahrspur
- 11.2: Fahrspur
- 12.1: Fahrspur
- 12.2: Fahrspur
- 13.1: Fahrspur
- 13.2: Fahrspur
- 14.1: Fahrspur
- 14.2: Fahrspur
- 15: Fahrbahn für permanentmagnetischen Vortrieb
- 15.1: Folienstreifen
- 16: Strömungskanal für Hydraulikflüssigkeit
- 18: Permanentmagnet
- 18.1: Schwimmkörper
- 19: Abstandshalter
- 19.1: Abstandshaltekopf
- 19.2: Koppelstange
- 20: Behälter für Hydraulikflüssigkeit
- 21: Zu- bzw. Rückströmleitung
- 22.1: Zuströmstelle
- 22.2: Rückströmstelle
- 23: Saugpumpe
- 25: Lichtsignalanlage
- 25.1: Haltelinie/Anhaltestelle
- 26: Bypass
- 27.1: Entnahmeöffnung
- 27.2: Rückströmöffnung
- 28: Ampel-/Bypasssteuerung
- 29: Verschlussklappe Bypass
- 30: Kreisverkehr
- 31.1: verstellbare Klappe Einfahrt Nord
- 31.2: verstellbare Klappe Ausfahrt Nord
- 32.1: verstellbare Klappe Einfahrt Süd
- 32.2: verstellbare Klappe Ausfahrt Süd
- 33.1: verstellbare Klappe Einfahrt Ost
- 33.2: verstellbare Klappe Ausfahrt Ost
- 34.1: verstellbare Klappe Einfahrt West
- 34.2: verstellbare Klappe Ausfahrt West
- 35: Fahrbahnverengung
- 36: verstellbare Klappe
- 40: Parkplatzanlage
- 41.1: Stellplatz
- 41.2: Stellplatz
- 41.3: Stellplatz
- 41.4: Stellplatz
- 41.5: Stellplatz
- 41.6: Stellplatz
- 41.7: Stellplatz
- 42: Zufahrt
- 42.1: Stellklappe
- 43: Ausfahrt
- 44.1: stellbare Klappe
- 44.2: stellbare Klappe
- 44.3: stellbare Klappe
- 44.4: stellbare Klappe
- 44.5: stellbare Klappe
- 44.6: stellbare Klappe
- 45: LKW
- 45.1: ferromagnetischer Materialstreifen LKW
- 46: Hänger
- 46.1: ferromagnetischer Materialstreifen Hänger

- A1: Fahrbahn (von Ost nach West)
- A2: Fahrbahn (von West nach Ost)
- B1: Fahrbahn (von Süd nach Nord)
- B2: Fahrbahn (von Nord nach Süd)
- C1: einspurige Fahrbahn
- L1: Schaltung von 8.1
- L2: Schaltung von 8.2
- L3: Schaltung von 8.3

## Patentansprüche

1. System mit auf einer Fahrbahn (16) ohne Eigenantrieb bewegbaren Modell- oder Spielfahrzeugen (1, 45, 46) umfassend einen an der Modellfahrzeug-Unterseite (2) angeordneten ferromagnetischen Materialstreifen (**3, 45.1, 46.1**) und einen Permanentmagneten (**18**), der unter der Fahrbahn bewegbar ist, wobei dessen Magnetfeld, mit dem ferromagnetischen Materialstreifen (**3.1, 3.2, 45.1, 46.1**) zusammenwirkend, eine Vorwärtsbewegung des Modellfahrzeugs (**1, 45, 46**) bewirkt, **dadurch gekennzeichnet, dass** der Permanentmagnet (18) in einem unter der Fahrbahn (15) angeordneten Strömungskanal (16) von einer darin strömenden Hydraulikflüssigkeit mitnehmbar ist.

2. System nach Anspruch 1, **dadurch gekennzeichnet, dass** der Permanentmagnet (**18**) in dem Strömungskanal (**16**) unter der Fahrbahn (**15**) mit einem, mit der Hydraulikflüssigkeit zusammenwirkenden Schwimmkörper (**18.1**) versehen ist und von diesem getragen wird.

3. System nach Anspruch 2, **dadurch gekennzeichnet, dass** zur Verbesserung der Führung des Schwimmkörpers (**18.1**) im Strömungskanal (**16**) dieser mit nach vorwärts und nach rückwärts gerichteten Abstandshaltern (**19**) versehen ist, wobei das jeweils freie Ende eines Abstandshalters (**19**) einen Abstandshaltekopf (**19.1**) aufweist.

4. System nach Anspruch 1 bis 3, **dadurch gekennzeichnet, dass** zur Bewegung der Hydraulikflüssigkeit eine Saugpumpe (**23**) eingesetzt ist, die in einer Zu- und Rückströmleitung (**21**) zum Strömungskanal (**16**) angeordnet ist, so dass die Ausströmung der Hydraulikflüssigkeit aus dem Strömungskanal (**16**) durch Ansaugen in Bewegung gesetzt wird.

5. System nach einem der Ansprüche 1 bis 4, **dadurch gekennzeichnet, dass** zur Verringerung der Reibung zwischen der Fahrbahn (**15**) und dem Modellfahrzeug (**1, 45, 46**) die Oberseite der Fahrbahn (**15**) mit einem glatten Folienstreifen (**15.1**) versehen ist.

6. System nach einem der Ansprüche 1 bis 4, **dadurch gekennzeichnet, dass** parallel zum Strömungskanal (**16**) ein Bypass (**26**) und eine steuerbare Verschlussklappe (**28**) zur Realisierung von Anhaltestellen (**25.1**) vorgesehen sind.

7. System nach Anspruch 6, **dadurch gekennzeichnet, dass** eine Anhaltestelle (**25.1**) zur Sicherung des Verkehrs mit einer Lichtsignalanlage (**25**) versehen ist.

8. System nach einem der Ansprüche 1 bis 4, **dadurch gekennzeichnet, dass** im Strömungskanal (**16**) mindestens eine verstellbare Klappe (**36**) zur Realisierung der Einfahrt in eine bzw. der Ausfahrt aus einer einspurigen Fahrbahn (**C1**) vorgesehen ist.

9. System nach einem der Ansprüche 1 bis 4, **dadurch gekennzeichnet, dass** im kreisförmigen Strömungskanal (**16**) verstellbare Klappen (**31.1, 31.2, 32.1, 32.2, 33.1, 33.2, 34.1, 34.2**) zum Öffnen und Schließen von Abzweigungen vorgesehen sind.

10. System nach Anspruch 9, **dadurch gekennzeichnet, dass** die Abzweigungen (**31.1, 31.2, 32.1, 32.2, 33.1, 33.2, 34.1, 34.2**) an einem kreisförmigen Strömungskanal (16) als Kreisverkehr (30) vorgesehen sind.

11. System nach einem der Ansprüche 1 bis 4, **gekennzeichnet durch** eine Parkplatzanlage (**40**), deren Zufahrt (**42**) und Ausfahrt (**43**) über eine Stellklappe (**42.1**) geregelt ist, diese weist mindestens einen Stellplatz (**41.1 - 41.7**) für Modellfahrzeuge (**1**) auf, wobei die Einfahrten zu den Stellplätzen (**41.1 - 41.7**) mit verstellbaren Klappen (**44.1 - 44.6**) zur Auswahl des Stellplatzes (**41.1 - 41.7**) versehen sind, und wobei für das Einfahren im Bereich der Zufahrt (**42**) eine Zuströmstelle (**22.1**) und im Bereich der Stellplätze (**41.1 - 41.7**) dazu korrespondierende Rückströmstellen (**22.2**) vorgesehen sind, sowie für das Ausfahren im Bereich der Stellplätze (**41.1 - 41.7**) Zuströmstellen (**22.1**) und im Bereich der Ausfahrt (**43**) eine dazu korrespondierende Rückströmstelle (**22.2**) vorgesehen sind.

12. System nach einem der Ansprüche 1 bis 10, **dadurch gekennzeichnet, dass** als Modellfahrzeug (**1**) ein LKW (**45**) vorgesehen ist, an den ein Hänger (**46**) angekoppelt ist, wobei der LKW (**45**) und der Hänger (**46**) an ihren Unterseiten je einen ferromagnetischen Materialstreifen (**45.1, 46.1**) aufweisen, wobei im Strömungskanal (**16**) je ein Schwimmkörper (**18.1**) mit Permanentmagnet (**18**) für den LKW und den Hänger vorgesehen ist, und wobei der Abstand der beiden Permanentmagnete (**18**) dem Abstand des, am LKW (**45**) und Hänger (**46**) vorgesehenen ferromagnetischen Materialstreifen (**45.1, 46.1**), gleicht.

13. System nach Anspruch 11, **dadurch gekennzeichnet, dass** der Abstand der beiden Permanentmagnete (**18**) durch eine, die beiden Schwimmkörper (**18.1**) koppelnde Koppelstange (**19.2**) sicher gestellt ist, die vorzugsweise die Abstandshalteköpfe (**19.1**) der einander zugewandten Abstandshalter (**19**) formschlüssig erfasst.

## Claims

1. A system with model or toy vehicles (1, 45, 46) movable on a carriageway (15) without self-propulsion, comprising a ferromagnetic material strip (3, 45.1, 46.1) arranged on the model vehicle underside (2) and a permanent magnet (18) movable underneath the carriageway (15), wherein the magnetic field of the permanent magnet, in cooperation with the ferromagnetic material strip (3.1, 3.2, 45.1, 46.1), causes the model vehicle (1, 45, 46) to move forward, **characterised in that** the permanent magnet (18) can be taken along in a flow channel (16) arranged underneath the carriageway (15) by a hydraulic fluid flowing therein.

2. The system according to claim 1, **characterised in that** a permanent magnet (18) in the flow channel (16) underneath the carriageway (15) is provided with a floating body (18.1) cooperating with the hydraulic fluid and is carried by the same.

3. The system according to claim 2, **characterised in that** in order to improve the guidance of the floating body (18.1) in the flow channel (16) this is provided with forward and backward facing spacers (19), wherein the respectively free end of a spacer (19) comprises a spacer head (19.1).

4. The system according to claim 1 to 3, **characterised in that** to move the hydraulic fluid a suction pump (23) is used, which is arranged in a flow and return line (21) to the flow channel (16), so that the outflow of the hydraulic fluid from the flow channel (16) is set into motion by suction.

5. The system according to one of claims 1 to 4, **characterised in that** in order to reduce friction between the carriageway (15) and the model vehicle (1, 45, 46) the topside of the carriageway (15) is provided with a smooth film strip (15.1).

6. The system according to one of claims 1 to 4, **characterised in that** a bypass (26) and a controllable closing flap (28) are provided in parallel to the flow channel (16) for realising stopping points (25.1).

7. The system according to claim 6, **characterised in that** a stopping point (25.1) is provided for controlling the traffic with a light signal system (25).

8. The system according to one of claims 1 to 4, **characterised in that** at least one adjustable flap is provided (36) in the flow channel (16) for realising entry into or exit out of a one-lane carriageway (C1).

9. The system according to one of claims 1 to 4, **characterised in that** adjustable flaps (31.1, 31.2, 32:1, 32.2, 33.1, 33.2, 34.1, 34.2) for opening and closing turn-offs are provided in the circular flow channel (16).

10. The system according to claim 9, **characterised in that** the turn-offs (31.1, 31.2, 32.1, 32.2, 33.1, 33.2, 34.1, 34.2) are provided on a circular flow channel (16) representing a roundabout (30).

11. The system according to one of claims 1 to 4, **characterised by** a car park (40), the entry (42) and exit (43) of which is controlled via a control flap (42.1) the car park comprising at least one parking space (41.1 - 41.7) for model vehicles (1), wherein the entries to the parking spaces (41.1 - 41.7) are provided with adjustable flaps (44.1 - 44.6) for selecting the parking space (41.1 - 41.7), and wherein a flow point (22.1) is provided for the drive-in in the area of the entry (42) and corresponding return points (22.2) are provided in the area of the parking spaces (41.1 - 41.7), and wherein flow points (22.1) are provided for the drive-out in the area of the parking spaces (41.1 - 41.7) and a corresponding return point (22.2) is provided in the area of the exit (43).

12. The system according to one of claims 1 to 10, **characterised in that** the model vehicle (1) is a lorry (45), to which a trailer (46) is coupled, wherein the lorry (45) and the trailer (46) each comprise a ferromagnetic material strip (45.1, 46.1) on the underside, wherein (16) a floating body (18.1) with a permanent magnet (18) is provided for both the lorry and the trailer in the flow channel, and wherein the distance between the two permanent magnets (18) is comparable to the distance between the ferromagnetic material strips (45.1, 46.1) provided on the lorry (45) und the trailer (46).

13. The system according to claim 11, **characterised in that** the distance between the two permanent magnets (18) is ensured by a coupling rod (19.2) coupling the two floating bodies (18.1), wherein the coupling rod preferably grasps the spacer heads (19.1) of the spacers (19) facing each other in a form-lock.

## Revendications

1. Système avec des modèles réduits de véhicules ou véhicules miniatures (1,45,46) mobiles sur une chaussée (15) sans entraînement propre comprenant une bande de matériau (3,45.1,46.1) ferromagnétique disposée sur la face inférieure du modèle réduit de véhicule (2) et un aimant permanent (18) qui est mobile sous la chaussée (15), dont le champ magnétique active un mouvement en avant du modèle réduit de véhicule (1,45,46) en coopération avec la bande de matériau (3.1,3.2,45.1,46.1) ferromagnétique, **caractérisé en ce que** l'aimant permanent (18) peut être entraîné dans un conduit d'écoulement (16) disposé sous la chaussée (15) par un liquide hydraulique s'écoulant dedans.

2. Système selon la revendication 1, **caractérisé en ce qu'**un aimant permanent (18) dans le conduit d'écoulement (16) sous la chaussée (15) est doté d'un corps flottant (18.1) coopérant avec le liquide hydraulique et est supporté par celui-ci.

3. Système selon la revendication 2, **caractérisé en ce que** pour améliorer le guidage du corps flottant (18.1) dans le conduit d'écoulement (16), celui-ci est doté d'écarteurs (19) orientés vers l'avant et vers l'arrière, l'extrémité respectivement libre d'un écarteur (19) comportant une tête d'écartement (19.1).

4. Système selon la revendication 1 à 3, **caractérisé en ce que** pour déplacer le liquide hydraulique une pompe aspirante (23) est utilisée qui est disposée dans une conduite de flux et de reflux (21) vers le conduit d'écoulement (16) de telle manière que l'écoulement de liquide hydraulique du conduit d'écoulement (16) est mis en mouvement par aspiration.

5. Système selon l'une quelconque des revendications 1 à 4, **caractérisé en ce que** pour réduire le frottement entre la chaussée (15) et le modèle réduit de véhicule (1,45,46) la face supérieure de la chaussée (15) est dotée d'une bande de feuille lisse (15.1).

6. Système selon l'une quelconque des revendications 1 à 4, **caractérisé en ce que** parallèlement au conduit d'écoulement (16), une dérivation (26) et un clapet de fermeture (28) pouvant être commandé sont prévus pour réaliser des points d'arrêt (25.1).

7. Système selon la revendication 6, **caractérisé en ce qu'**un point d'arrêt (25.1) est doté d'une installation à signal lumineux (25) pour sécuriser la circulation.

8. Système selon l'une quelconque des revendications 1 à 4, **caractérisé en ce que** dans le conduit d'écoulement (16) au moins un clapet réglable (36) est prévu pour réaliser l'entrée ou la sortie sur une chaussée (C1) à une voie.

9. Système selon l'une quelconque des revendications 1 à 4, **caractérisé en ce que** dans un conduit d'écoulement circulaire (16), des clapets réglables (31.1, 31.2, 32.1, 32.2, 33.1, 33.2, 34.1, 34.2) sont prévus pour ouvrir et fermer des bifurcations.

10. Système selon la revendication 9, **caractérisé en ce que** les bifurcations (31.1, 31.2, 32.1, 32.2, 33.1, 33.2, 34.1, 34.2) sont prévues comme sens giratoire (30) dans un conduit d'écoulement (16) circulaire.

11. Système selon l'une quelconque des revendications 1 à 4, **caractérisé par** une installation de stationnement (40), dont l'accès (42) et la sortie (43) sont régulés par un clapet de réglage (42.1), celui-ci comportant au moins une place de stationnement (41.1 - 41.7) pour les modèles réduits de véhicules (1), les entrées aux places de stationnement (41.7-41.7) étant dotées de clapets réglables (44.1-44.6) pour sélectionner la place de stationnement (41.1-41.7) et un point d'affluence (22.1) pour l'entrée dans la zone de l'accès (42) et des points, de reflux (22.2) correspondant à cet effet dans la zone des places de stationnement (41.1-41.7) étant prévus, et des points d'affluence (22.1) pour la sortie dans la zone des places de stationnement (41.1-41.7) et un point de reflux correspondant à cet effet (22.2) dans la zone de la sortie (43) étant prévus.

12. Système selon l'une quelconque des revendications 1 à 10, **caractérisé en ce qu'**un camion (45) prévu comme modèle réduit de véhicule (1) auquel une remorque (46) est accouplée, le camion (45) et la remorque (46) comportant respectivement sur leurs faces inférieures une bande de matériau ferromagnétique (45.1, 46.1), un corps flottant (18.1) avec un aimant permanent (18) pour le camion et la remorque étant prévus dans le conduit d'écoulement (16) et la distance entre les deux aimants permanents (18) étant identique à la distance de la bandes de matériau (45.1, 46.1) ferromagnétiques prévue sur le camion (45) et la remorque (46).

13. Système selon la revendication 11, **caractérisé en ce que** la distance entre les deux aimants permanents (18) est assuré par une barre de couplage (19.2) accouplant les deux corps flottants (18.1), qui saisit par conformité de forme de préférence les têtes d'écartement (19.1) des écarteurs (19) tournés l'un vers l'autre.
